# EUROPÄISCHE PATENTSCHRIFT

(11) **EP 3 538 482 B1**
(45) Veröffentlichungstag und Bekanntmachung des Hinweises auf die Patenterteilung: **28.12.2022**
(21) Anmeldenummer: 17803778.4
(22) Anmeldetag: 08.11.2017
(51) Int. Cl.: B82Y 40/00, H01J 1/304, H01J 9/02, C01B 32/156

(54) **VERFAHREN ZUR HERSTELLUNG EINES ELEKTRONENEMITTERS MIT EINER NANOSTÄBCHEN ENTHALTENDEN BESCHICHTUNG**
METHOD FOR PRODUCING AN ELECTRON EMITTER COATED WITH A NANOROD-CONTAINING COATING
PROCÉDÉ DE FABRICATION D'UN ÉMETTEUR D'ÉLECTRONS AVEC UN REVÊTEMENT CONTENANT DES NANOTIGES

(30) Priorität: 08.11.2016 DE 102016013279
(43) Veröffentlichungstag der Anmeldung: 18.09.2019
(73) Patentinhaber: Cetteen GmbH, 91054 Erlangen (DE)
(72) Erfinder: WEBER, Immo, 91052 Erlangen (DE); JAFARI, Houman, 91052 Erlangen (DE); GAO, Bo, 91054 Erlangen (DE)
(74) Vertreter: Meyer, Rudolf
(86) Internationale Anmeldenummer: PCT/EP2017/001299
(87) Internationale Veröffentlichungsnummer: WO 2018/086737

(56) Entgegenhaltungen:
- JP-A- 2000 182 509
- JP-A- 2007 026 711
- US-A1- 2002 074 932
- US-A1- 2004 055 892

## Beschreibung

Nanostäbchen, insbesondere Kohlenstoffnanoröhren, enthaltenden Beschichtung.

Unter Nanostäbchen werden sowohl massive als auch hohle stabförmige Teilchen verstanden. Nanostäbchen werden, sofern sie nicht hohl sind, auch als Nanosticks oder Nanorods bezeichnet. Ansonsten handelt es sich um Nanoröhren. Aus Kohlenstoff gebildete Nanoröhren, das heißt Kohlenstoffnanoröhren, werden kurz als CNTs (carbon nanotubes) bezeichnet.

Kohlenstoffnanoröhren weisen eine Vielzahl von technischen Anwendungspotentialen auf; eine Übersicht und Perspektive ist in: Kanian Balasubramanian, Marko Burghard, "Funktionalisierte Kohlenstoff-Nanoröhren", Chemie in unserer Zeit, 2005, Band 39, Seiten 16 bis 25 und in: Andreas Hirsch, "The era of carbon allotropes", Nature Materials, 2010, Band 9, Seiten 868 bis 871 zusammengefasst. Kohlenstoffnanoröhren sind annähernd zylinderförmige Moleküle, deren Wände wie die Ebenen des Graphits aus Kohlenstoff bestehen, wobei die Kohlenstoffatome auf der Mantelfläche eine wabenartige Struktur mit Sechsecken aufweisen. Kohlenstoffnanoröhren können offene oder geschlossenen Röhren darstellen; bei geschlossenen Kohlenstoffnanoröhren weichen deren geschlossene Enden von der Graphitstruktur der zylinderförmigen Wände ab und gehen in eine Fullerenstruktur über. Auf den Mantelflächen und an geschlossenen Enden ist bei Kohlenstoffnanoröhren jeweils ein Kohlenstoffatom mit drei weiteren Kohlenstoffatomen kovalent verbunden. Bei offenen Kohlenstoffnanoröhren sind die Kohlenstoffatome am betreffenden Ende mit weniger als drei Bindungspartnern kovalent verbunden. Der Durchmesser der Kohlenstoffnanoröhren liegt im Bereich von 0,3 bis 200 nm. Längen von mehreren Millimetern für einzelne Kohlenstoffnanoröhren und bis zu 20 cm für Bündel aus Kohlenstoffnanoröhren wurden bereits erreicht.

### BESTÄTIGUNGSKOPIE

In Kohlenstoffnanoröhren können weitere freie Atome und Moleküle eingeschlossen sein, beispielsweise Edelgase, Metallatome und Metallcluster, Kohlendioxid und Alkane. Mehrwandige Kohlenstoffnanoröhren umfassen solche Kohlenstoffnanoröhren, in welche mindestens eine weitere Kohlenstoffnanoröhre als separates Molekül eingeschlossen ist. Kohlenstoffnanoröhren können ebenfalls Heteroatome aufweisen, insbesondere Stickstoff, und mit einer Vielzahl von anorganischen und organischen Resten funktionalisiert sein.

Die sehr hohe elektrische und thermische Leitfähigkeit von Kohlenstoffnanoröhren ermöglicht eine hohe Stromtragfähigkeit ohne nennenswerte Hitzeentwicklung auf die einzelnen Kohlenstoffnanoröhren selbst. Weiter weisen Kohlenstoffnanoröhren einen sehr niedrigen Feldstärke-Schwellenwert von kleiner als 2 V µm⁻¹ für die Emission von Elektronen durch ein elektrisches Feld auf. Daher eigenen sich Kohlenstoffnanoröhren als Komponenten für Elektronenemitter, wie dies beispielsweise in DE 603 05 371 T2 für ein Plasmaanzeigegerät, in US 2004 0070326 A1 für eine Feldemissionsanzeigevorrichtung und in US 6 914 372 B1 als auch in US 6 097 138 für einen Elektronenemitter allgemein vorgeschlagen wird. Insbesondere eignen sich Kohlenstoffnanoröhren als Kathodenmaterial für Röntgenröhren, wie dies beispielsweise in DE 10 2008 052 363 A1, DE 11 2012 004 856 T5, DE 10 2010 012 394 A1, DE 10 2009 049 663 A1 und in DE 10 2009 040 769 A1 offenbart ist. Zum technischen Hintergrund wird auf die Veröffentlichung: Richard J Parmee et al., X-ray generation using carbon nanotubes, Nano Convergence (2015)2:1 verwiesen. Über das technische Gebiet der Elektronenemitter hinausgehende Informationen zu CNTs sind der Veröffentlichung: M. S. Fuhrer, Single-Walled Carbon Nanotubes for Nanoelectronics, Advanced Semiconductor and Organic Nano-Techniques (Part II) zu entnehmen.

Bei einem stabähnlichen elektrischen Leiter als elektrischer Pol ist an dessen beiden Enden die jeweilige elektrische Feldstärke am größten. Auch eine einzelne Kohlenstoffnanoröhre stellt einen solchen stabförmigen elektrischen Leiter dar. Somit kann bei einem mittleren elektrischen Feldstärkebetrag in der Größenordnung von 1 V µm⁻¹ die effektive lokale elektrische Feldstärke am Ende der Kohlenstoffnanoröhre bereits 10³ - 10⁴ V µm⁻¹ erreichen. Diese physikalischen Zusammenhänge sind in: Niels de Jonge, Jean-Marc Bonard, "Carbon nanotube electron sources and applications", Philosophical Transactions of the Royal Society of London A, 2004, Band 362, Seiten 2239 bis 2266 und in: Grogory S. Bocharov, Alexander V. Eletskü, "Theory of Carbon Nanotube (CNT)-Based Electron Field Emitters", Nanomaterials, 2013, Band 3, Seiten 393 bis 442 zusammengefasst. Daher lässt sich der Feldstärke-Schwellenwert bei Kathoden zur Emission von Elektronen, welche Kohlenstoffnanoröhren aufweisen, noch weiter absenken, indem diese in senkrechter Vorzugsrichtung auf die Emitteroberfläche angeordnet werden. Da einwandige Kohlenstoffnanoröhren Halbleiter und mehrwandige Kohlenstoffnanoröhren metallische Leiter darstellen, sind mehrwandige Kohlenstoffnanoröhren für Anwendungen als Elektronenemitter besonders geeignet, wie dies aus der Abhandlung: Loïck-Alexandre Gautier, Vincent Le Borgne, Samir AI Moussalami, My Ali EI Khakani, "Enhanced field electron emission properties of hierarchically structured MWCNT-based cold cathodes", Nanoscale Research Letters, 2014, Band 9, Ausgabe, Seite 55 und fortfolgende sowie aus der Abhandlung: Alexander A. Kuznetzov, Sergey B. Lee, Mei Zhang, Ray H. Baughman, Anvar A. Zakhidov,"Electron field emission from transparent multiwalled carbon nanotube sheets for inverted field emission displays", CARBON, 2010, Band 48, Seiten 41 bis 48 hervorgeht.

Folglich sind mit Kohlenstoffnanoröhren besonders dann leistungsstarke Elektronenemitter realisierbar, wenn die Kohlenstoffnanoröhren möglichst senkrecht im Sinne einer anisotropen Vorzugsrichtung auf der Oberfläche des Emitters angeordnet sind. Eine solche Vorzugsrichtung der Kohlenstoffnanoröhren gestattet auch eine effizientere Wärmeabfuhr. Beispielsweise sind solche Anordnungen ebenfalls für Röntgenröhren aus der DE 10 2008 052 363 A1 und für Kathoden von Alkalimetall-Schwefel-Batterien aus DE 10 2010 030 887 A1 bekannt.

Als Oberflächen für die Beschichtung mit Kohlenstoffnanoröhren werden für Elektronenemitter temperaturbeständige Materialein, wie Metall, Silicium, Glas oder Keramik gewählt. Daher ist es erforderlich, dass der Bereich, welcher mit Kohlenstoffnanoröhren beschichtet ist, eine möglichst gleiche elektrische Leitfähigkeit an allen Punkten des Gesamtbeschichtungsbereiches aufweist, das heißt, an allen Punkten des Ge- . samtbeschichtungsbereiches soll der elektrische Flächenwiderstand *R_{F}* möglichst gering variieren. Der elektrische Flächenwiderstand *R_{F}* einer Widerstandsschicht ist gegeben durch das Verhältnis des elektrischen isotropen spezifischen Widerstandes *ρ* zu der Schichtdicke der Widerstandsschicht; die Einheit des elektrischen Flächenwiderstandes *R_{F}* ist daher identisch mit der Einheit des elektrischen Widerstandes Ω (Ohm).

Nach dem Stand der Technik erfolgt die Aufbringung von Kohlenstoffnanoröhren auf den Elektronenemitter mittels chemischer Gasphasenabscheidung. Dieses Verfahren ist technisch aufwändig, gelingt nicht auf jeder Substratoberfläche, muss an die Geometrie der Oberfläche angepasst werden und führt oft nicht zu gleichförmigen Abscheidungen. Daraus resultieren Schwankungen sowohl der Dichte an Kohlenstoffnanoröhren als auch des elektrischen Flächenwiderstandes *R_{F}* in Ortsabhängigkeit auf dem Gesamtbeschichtungsbereich.

In der DE 10 2008 052 363 A1 werden daher die Kohlenstoffnanoröhren in einzelnen Matrixelementen auf die Oberfläche aufgebracht. Diese Matrixelemente müssen durch Aufwachsen von Kohlenstoffnanoröhren oder durch einen Sintervorgang erst separat und damit aufwändig hergestellt werden. Weiter dürfen diese Matrixelemente nur weniger als 5 Vol. % an Kohlenstoffnanoröhren enthalten. Ansonsten weisen diese Matrixelemente eine zu hohe Brüchigkeit auf. Über die Komponenten des Sinterkörpers und den eigentlichen Sintervorgang zu den Matrixelementen sind aus DE 10 2008 052 363 A1 keine näheren Angaben zu entnehmen; eindeutige chemische Verbindungen, Mischungsverhältnisse und eindeutige Prozessbedingungen werden nicht offenbart.

In EP 1 957 397 B1 wird ein Verfahren zur Herstellung von Elektronenemittern mit einer Kohlenstoffnanoröhren enthaltenden Beschichtung beschrieben. Dieses Verfahren beruht auf einem Aufbringen einer Paste, welche Kohlenstoffnanoröhren, ein organisches Bindemittel, Metallpartikel und Lösemittel enthält. Die Paste wird auf den Gesamtbeschichtungsbereich aufgetragen und anschließend entweder durch eine Polymerisation ausgehärtet oder getempert. Allerdings offenbart die EP 1 957 397 B1 nicht die Zusammensetzung des organischen Bindemittels

In DE 602 21 951 T2 wird ebenfalls ein photolithographisches Verfahren zur Herstellung von Elektronenemittern mit einer Kohlenstoffnanoröhren enthaltenden Beschichtung beschrieben. Dieses Verfahren beruht ebenfalls auf einem Aufbringen einer Paste, welche Kohlenstoffnanoröhren, Alkalisilicat und ein Bindemittel enthält.

Wie in den Matrixelementen genau eine Vorzugsrichtung der Kohlenstoffnanoröhren erzielt wird, ist in der DE 10 2008 052 363 A1 nicht offenbart. In der DE 10 2010 030 887 A1 soll eine senkrechte Vorzugsrichtung der Kohlenstoffnanoröhren auf einer Metalloberfläche durch eine chemische Gasphasenabscheidung bewerkstelligt werden.

Eine Möglichkeit, die Nachteile der chemischen Gasphasenabscheidung zu umgehen und gleichzeitig Kohlenstoffnanopartikel in einer Vorzugsrichtung auf eine Substratoberfläche aufzubringen, offenbaren CN 105565295 und EP 1 579 457 B1. Allerdings sind diese Verfahren auf magnetisierte Kohlenstoffnanoröhren beschränkt und beruhen auf deren aufwändige Abscheidung aus Lösung in einem Magnetfeld. Auch diese Verfahren sind bezüglich des Substratmaterials und der Geometrie des Gesamtbeschichtungsbereiches beschränkt.

Über die regelmäßige Beschaffenheit des Gesamtbeschichtungsbereiches im Sinne einer ortsunabhängigen Anzahl von Kohlenstoffnanoröhren, über den elektrischen Flächenwiderstand *R_{F}* sowie Form und Ausprägung der anisotropischen Anordnung der Kohlenstoffnanoröhren pro Flächeneinheit finden sich in der DE 10 2008 052 363 A1, DE 10 2010 030 887 A1, CN 105565295 und in der EP 1 579 457 B1 ebenfalls keine Angaben.

In der Abhandlung: T. J. Vink, M. Gillies, J. C. Kriege, H. W. J. J. van de Laar, "Enhanced field emission from printed carbon nanotubes by mechanical surface modification", Applied Physics Letters, 2003, Band 83, Ausgabe 17, Seiten 3352 bis 3354 wird ein Verfahren vorgestellt, bei welchem eine Kohlenstoffnanoröhren enthaltende Paste mittels Siebdruck auf die Oberfläche eines Substrates aufgebracht wird. Die Vorzüge des Siebdruckes bestehen darin, dass mit diesem dünne als auch dicke form- und kantenpräzise Schichten auf eine Vielzahl von Materialien unterschiedlicher Oberflächengeometrie aufgebracht werden können. Das Siebdruckverfahren ist nasschemischen oder photolithographischen Techniken überlegen und technisch besonders einfach durchführbar. Das mit der Paste bedruckte Substrat wird schrittweise von 40° C auf 400° C getempert. Die Haftschicht soll danach als Bestandteile ein organisches Bindemittel und Kohlenstoffnanoröhren aufweisen. Zuletzt wird sukzessive an jedem Ort des Beschichtungsbereiches die Klebstoffseite einer Klebefolie, beispielsweise eines kommerziell erhältlichen Klebestreifens für den Heimwerker- oder Bürogebrauch, aufgedrückt und wieder abgezogen. Bei diesem Verfahrensschritt wird ein Anteil von Beschichtungsoberfläche abgetragen, welcher aus lockerem Material und Verunreinigungen besteht. Somit wird die Schichtdicke der Beschichtung reduziert. Nach dieser Behandlung resultiert eine Oberfläche, aus welcher aufrecht ausgerichtete, das heißt in senkrechter Vorzugsrichtung ausgerichtete, Kohlenstoffnanoröhren herausragen.

Die Ergebnisse dieses Verfahrens sind bezüglich der Anzahl der aufrecht ausgerichteten Kohlenstoffnanoröhren pro Fläche jedoch nicht hinreichend reproduzierbar. Nach der Durchführung dieses Verfahrens weisen selbst flache Mulden in dem betreffenden Beschichtungsbereich Verunreinigungen auf, wobei in den Mulden aus der Oberfläche herausragende und aufrecht ausgerichtete Kohlenstoffnanoröhren nicht aufzufinden sind. Es resultiert somit ein sehr unregelmäßig strukturierter Gesamtbeschichtungsbereich. Die mit diesem Verfahren hergestellte Beschichtung weist für technische Verwendungen, beispielsweise als Kathoden in Elektronenemittern, nicht die erforderliche Temperaturbeständigkeit von mindestens 500° C auf.

US2002074932A1 offenbart ein Verfahren zur Verbesserung der Feldemission eines Elektronenfeldemitters bereit, der aus einer nadelförmigen emittierenden Substanz wie nadelförmigem Kohlenstoff, einem nadelförmigen Halbleiter, einem nadelförmigen Metall oder einer Mischung davon besteht, umfassend das Anlegen einer Kraft an die Oberfläche des Elektronenfeldemitters Die Kraft führt zum Entfernen eines Teils des Elektronenfeldemitters, wodurch eine neue Oberfläche des Elektronenfeldemitters gebildet wird.

US2004055892A1 offenbart ein elektrophoretisches Verfahren zum Abscheiden einer strukturierten Beschichtung eines Nanostrukturmaterials auf einem Substrat , insbesondere einen Zusatz von Carbid-bildenden Partikeln, um die Haftung einer Haftschicht mit Kohlenstoff-Nanoröhren zu verbessern.

JP2007026711A offenbart eine Mikroelektronenquellenvorrichtung. Eine Kathodenelektrode und eine Widerstandsschicht sind auf ein Substrat laminiert, und Kohlenstoffnanoröhren sind auf der Widerstandsschicht angeordnet, wobei ein Ende über Aggregate von Kohlenstoffmaterialteilchen an der Widerstandsschicht befestigt ist.

US 2002/0074932 A1 offenbart ein Verfahren zur Herstellung eines Elektronenemitters nach dem Oberbegriff von Anspruch 1; mit einer Nanostäbchen (insbesondere Kohlenstoff-Nanoröhren) enthaltenden Beschichtung, wobei der von den Nanostäbchen abgezogene Elastomerfilm z.B. ein Ethylen-Acrylat-Elastomer oder Styrol-Butadien-Blockcopolymer ist.

Der Erfindung liegt die Aufgabe zugrunde, ein alternatives Verfahren zur Herstellung von Elektronenemittern zur Verfügung zu stellen, mit welchem ohne Zuhilfenahme eines Magnetfeldes eine für technische Anwendungen hinreichend thermostabile Schicht herstellbar ist, aus welcher Kohlenstoffnanoröhren in einer Vorzugrichtung relativ zu der Oberfläche herausragen.

Diese Aufgabe wird erfindungsgemäß durch das Verfahren mit den Merkmalen des Anspruchs 1 gelöst.

Die Nanostäbchen des Elektronenemitters können eine in sich einheitliche oder eine uneinheitliche Zusammensetzung aufweisen und entweder als Hohlkörper, das heißt Röhren, oder massiv ausgebildet sein.

Beispielsweise können die Nanostäbchen, insbesondere Nanoröhren, aus Metalloxiden gebildet sein. Grundsätzlich sind Nanostäbchen aus Metalloxiden - ebenso wie Nanodrähte, welche im vorliegenden Fall nicht relevant sind - zum Beispiel aus der Veröffentlichung "Theme issue: inorganic nanotubes and nanowires", Journal of Materials Chemistry, 2009, 19, 826 - 827 bekannt. In dieser Veröffentlichung sind unter anderem TiO₂, ZnO und Al₂O₃ und als Materialien, aus welchen Nanoröhren gebildet sein können, genannt.

Zur Herstellung des Emitters sind Metalloxide, beispielsweise Titanoxid, Zinkoxid oder Manganoxid sowohl in reiner als auch in dotierter Form geeignet. Ebenso können sonstige Materialien, aus welchen die Nanostäbchen aufgebaut sind oder welche in den Nanostäbchen enthalten sind, beispielsweise Metalle, Sulfide, Nitride oder Carbide, entweder in purer oder in dotierter Form vorliegen.

Zum technischen Hintergrund wird auf folgende Dokumente verwiesen:
Greta R. Patzke et al., Oxidic Nanotubes and Nanorods - Anisotropic Modules for a Future Nanotechnology, Angew. Chem. Int. Ed. 2002, 41, 5000 - 5015
Joshua Goldberger et al., Inorganic Nanotubes: A Novel Platform for Nanofluidics, Accounts of Chemical Research, Vol. 39, No. 4, 2006, 39, 239 - 248
C. N. R. Rao et al., Inorganic nanotubes, Dalton Celebration Perspective , Dalton Trans., 2003, 1 - 24
Reshef Tenne et al., Nanotubes from Inorganic Materials, Topics Appl. Phys. 80, 83 115 Springer-Verlag Berlin Heidelberg 2001
Reshef Tenne, Recent advances in the research of inorganic nanotubes and fullerenelike nanoparticles, Frontiers of Physics, 2014, 9(3): 370 - 377
Christos D. Malliakas et al., Inorganic Single Wall Nanotubes of SbPS4-xSex (0 ≤ x ≤ 3) with Tunable Band Gap, J. AM. Chem. Soc. 2006, 128, 6538 - 6539
Dmitri Golberg et al., Boron Nitride Nanotubes, Advanced Materials 2007, 19, 2413-2432, WILEY-VCH Verlag
Nasreen G. Chopra et al., Boron Nitride Nanotubes, Science Vol. 269 , 18 August 1995
Angel Rubio et al., Theory of graphitic boron nitride nanotubes, Rapid Communications Volume 49, Number 7, Physical Review B, 15 February 1994
Wei-Qiang Han et al., Transformation of BxCyNz nanotubes to pure BN nanotubes, 2002 American Institute of Physics, Applied Physics Letters, Volume 81, Number 6, 5 August 2002
Michael W Smith et al., Very long single- and few-walled boron nitride nanotubes via the pressurized vapor/condenser method, IOP Publishing Nanotechnology 20 (2009)

Sofern der Elektronenemitter ein Sulfid enthält, kann es sich beispielsweise um ein Metallsulfid, insbesondere Molybdändisulfid, handeln. Als Nitride, aus welchen Nanostäbchen des Elektronenemitters vollständig oder teilweise aufgebaut sein können, sind insbesondere Bornitrid, Aluminiumnitrid, Kohlenstoffnitrid und Galliumnitrid zu nennen. Als Carbid ist insbesondere Siliziumcarbid zur Herstellung der Nanostäbchen, insbesondere Nanoröhren, geeignet. Ebenso sind Nanostäbchen, insbesondere in der Form von Nanoröhren, aus Silizium, optional mit Dotierungselementen, herstellbar.

Auch die Verwendung von Nanostäbchen, welche Cer oder Lanthan enthalten, ist im Rahmen der Herstellung des Elektronenemitters möglich. In diesem Zusammenhang wird beispielhaft auf die Patentanmeldung WO 2014/076693 A1 sowie auf folgende weitere Dokumente hingewiesen:
Junqi Xu et al., Self-catalyst growth of LaB6 nanowires and nanotubes, Science Direct, 2006 Elsevier B. V. Chemical Physics Letters 423 (2006) 138 - 142
Wei Wei et al., LaB6 tip-modified multiwalled carbon nanotube as high quality field emission electron source, American Institute of Physics, Appl. Phys. Lett. 89, 203112 (2006)
H. B. Kushkhov et al., Electrochemical Synthesis of CeB6 Nanotubes, Journal of Materials Science and Chemical Engineering, 2014, 2, 57-62

Als Ausgangsprodukte zur Herstellung der Nanostäbchen, welche im Betrieb des Elektronenemitters Elektronen emittieren, sind auch stabförmige, optional hohle, Elemente aus polymeren Materialien geeignet. In diesem Zusammenhang wird auf folgende Dokumente hingewiesen:
Yun-Ze Long et al., Recent advances in synthesis, physical properties and applications of conducting polymer nanotubes and nanofibers, Elsevier, Progress in Polymer Science 36 (2011) 1415-1442
Yun-Ze Long et al., A Review on Electronic Transport Properties of Individual Conducting Polymer Nanotubes and Nanowires, Nanowires Science and Technology, Book edited by Nicoleta Lupu, pp 402 Feb. 2010
Filippo Pierini et al., Comparison between Inorganic Geomimetic Chrysotile and Multiwalled Carbon Nanotubes in the Preparation of One-diminsional Conducting Polymer Nanocomposites, Fibers and Polymers 2015, Vol. 16, No. 2, 426 - 433
Alla Voldman et al., A Nanocomposite of Polyaniline/Inorganic Nanotubes, Macromolecular Chemistry and Physics 2013, 214, 2007 - 2015
Mei Gao et al., Aligned Coaxial Nanowires of Carbon Nanotubes Sheathed with Conducting Polymers, Wiley-VCH Verlag GmbH, D-69451 Weinheim, 2000
Yeon-Yi Kim et al., Preparation and Characteristics of Conducting Polymer-Coated MWCNTs as Electromagnetic Interference Shielding Materials, Carbon Letters, Vol. 12 No. 1, March 2011 pp 48 - 52

Die Nanostäbchen des Elektronenemitters können aus Ausgangsprodukten, welche komplett aus polymeren Materialien aufgebaut sind, oder aus Ausgangsprodukten, welche lediglich partiell, insbesondere in Form einer Beschichtung - wie prinzipiell aus den beiden letztgenannten Dokumenten bekannt ist - Polymermaterialien aufweisen, gefertigt werden. In beiden Fällen ist die für den Betrieb des Elektronenemitters erforderliche Temperaturbeständigkeit durch eine Pyrolyse erreichbar.

In zahlreichen möglichen Ausgestaltungen werden im Rahmen des erfindungsgemäßen Verfahrens Kohlenstoffnanoröhren als Nanostäbchen verwendet. Hinsichtlich des Aufbaus und der Eigenschaften von Kohlenstoffnanoröhren wird auf den eingangs zitierten Stand der Technik sowie auf folgende Dokumente verwiesen, die jeweils Kombinationen von Kohlenstoff mit weiteren Bestandteilen in Nanoröhren zum Gegenstand haben:
Toshihiko Fujimori et al., Conducting linear chains of sulphur inside carbon nanotubes, nature communications 4:2162, published 12 Jul 2013
Laura Cabana et al., Synthesis of PbI2 Single-Layered Inorganic Nanotubes Encapsulated Within Carbon Nanotubes, Advanced Materials 2014, 26, 2016 - 2021
V. K. Ksenevich et al., Electrical properties of carbon nanotubes / WS2 nanotubes (nanoparticles) hybrid films, Nanosystems: Physics, Chemistry, Mathematics, 2016, 7 (I), P. 37 - 43
Rajkumar Patra et al., Enhanced field emission from cerium hexaboride coated multiwalled carbon nanotube composite films: A potential material for next generation electron sources, Journal of Applied Physics 115, 094302 (2014)

Auch Kohlenstoffnanoröhren oder aus anderen Materialien, beispielsweise Oxiden oder Nitriden, gebildete Nanoröhren, welche mit einem metallischen oder keramischen Material gefüllt sind oder dotiert sind, zum Beispiel mit Stickstoff, Gold oder Europium, sind für die Verwendung in der zur Emission von Elektronen vorgesehenen Beschichtung des Elektronenemitters geeignet. Prinzipiell sind derartige Nanoröhren beispielsweise aus folgenden Dokumenten bekannt:
Dmitri Golberg et al., Properties and engineering of individual inorganic nanotubes in a transmission electron microscope, The Royal Society of Chemistry 2009, Journal of Material Chemistry , 2009, 19, 909-920
Hua Chen et al., Nano Au-decorated boron nitride nanotubes: Conductance modification and field-emission enhancement, American Institute of Physics, Appl. Phys. Lett. 92, 243105 (2008)
Hua Chen et al., Eu-doped Boron Nitride Nanotubes as a Nanometer-Sized Visible-Light Source, Advanced Materials 2007, 19, 1845 - 1848

In Ausführungsformen, in denen Kohlenstoffnanoröhren, insbesondere ausschließlich aus Kohlenstoff bestehend, als Nanostäbchen verwendet werden, weisen diese beispielsweise einen äußeren Durchmesser von 0,4 nm bis 20 nm und eine Länge von 1 µm bis 20 µm auf. Ist in der nachfolgenden Beschreibung allgemein von Kohlenstoffnanoröhren die Rede, so schließt dies einwandige und mehrwandige, beidseitig oder einseitig offene oder geschlossene Kohlenstoffnanoröhren in gemischter und reiner Form unabhängig von deren jeweiligen Herstellungsverfahren mit ein.

Das vorgeschlagene Verfahren zur Herstellung eines Elektronenemitters mit einer Kohlenstoffnanoröhren enthaltenden Beschichtung auf einer Bauteiloberfläche umfasst folgende Schritte:
(I) Aufbringung von Nanostäbchen, insbesondere Kohlenstoffnanoröhren, auf den Gesamtbeschichtungsreich über eine anorganische und elektrisch leitfähige Haftschicht;
(II) Auftragen einer flüssigen Polymermischung auf den Gesamtbeschichtungsreich der Vorrichtung, wobei die Polymermischung ein quervernetzbares Polymer und eine Quervernetzungskomponente enthält;
(III) Aushärtung des nach dem Verfahrensschritt (II) entstandenen Polymerfilms zu einem Elastomerfilm;
(IV) Abziehen des nach Verfahrensschritt (III) erzeugten Elastomerfilms.

Die für den Verfahrensschritt (II) verwandte Polymermischung ist bei 20° C flüssig und besteht aus eine Mischung von zwei Komponenten, wovon die eine Komponente ein quervernetzbares Silicon-Polymer und die andere Komponente ein Quervernetzungsreagenz enthält, und der im Verfahrensschritt (II) aufgebrachte Polymerfilm wird in dem Verfahrensschritt (III) thermisch zu einem Elastomerfilm ausgehärtet.

Für ein Bauteil des Elektronenemitters, dessen Oberfläche teilweise oder ganz für die Beschichtung mit Nanostäbchen, insbesondere Kohlenstoffnanoröhren, mit dem vorgeschlagenen Verfahren vorgesehen ist, kann ein elektrisch leitendes oder nichtleitendes Material mit einer Temperaturbeständigkeit von mindestens 600° C und vorzugsweise von mehr als 800° C gewählt werden. Als Substrate sind für das vorgeschlagene Verfahren anorganische Materialien, wie Silicium, Metalle und Metallegierungen mit einem Schmelzpunkt oberhalb von 1000° C, Gläser oder Keramiken, besonders geeignet.

Beispiele für geeignete Metalle sind Molybdän, Wolfram, Nickel und Kupfer. Beispiele für geeignete Metallegierungen sind Edelstähle. Insbesondere sind solche Eisenlegierungen geeignet, welche als weitere Bestandteile Cobalt oder Nickel oder Palladium oder Platin oder Nickel und Cobalt enthalten und vorzugswiese einen Wärmeausdehnungskoeffizienten von nicht mehr als 5 ppm K⁻¹ aufweisen.

Beispiele für geeignete Gläser sind silikatische Gläser und Boratgläser mit einem Transformationsbereich über 850° C. Beispiele für geeignete Keramiken sind gebrannter Ton, Porzellan, Magnesiumoxid, Borcarbid, Bortnitrid, Aluminiumnitrid, Aluminiumoxid, Bor-Aluminium- und Titan-Aluminium- und Zirkonium-Aluminium-Mischoxide, Zirkoniumoxid, Mullit, Siliciumcarbid sowie Boride, Silicide und Titanate. Mit dem vorgeschlagenen Verfahren kann auch die Beschichtung einer oder mehrerer Beschichtungen auf der Oberfläche eines Bauteiles erfolgen, welches als Bestandteil für den Elektronenemitter vorgesehen ist. Beispielsweise kann mit dem vorgeschlagenen Verfahren eine Oberfläche einer Beschichtung aus Wolfram, Molybdän, Silber, einer Silber-Platin-Legierung, einer Silber-Palladium-Legierung, Gold, einer Gold-Platin-Legierung, einer Gold-Palladium-Legierung, Platin, Palladium, Kohlenstoff, Kupfer oder einer Eisen-Nickel-Legierung, welche auf Aluminiumoxid aufgebracht ist, beschichtet werden.

Als hinreichend temperaturbeständig hat sich eine solche elektrische leitfähige Schicht erwiesen, welche rein anorganisch ist. Eine solche Schicht ist frei von solchen chemischen Verbindungen, welche kovalente Kohlenstoff-Wasserstoff-Bindungen aufweisen.

Die elektrische Haftschicht enthält solche Partikel, welche untereinander in mindestens einem Kontaktpunkt aneinandergesintert sind. Die Haftschicht ist dabei ebenfalls durch Ansinterung dieser Partikel auf der Oberfläche des Bauteiles fest angebunden. Die Kohlenstoffnanoröhren liegen zwischen diesen aneinandergesinterten Partikeln fest ein.

Der erforderliche elektrische Leitungskontakt zwischen den aufgebrachten Kohlenstoffnanoröhren wird durch die Haftschicht vermittelt. Die Haftschicht trägt somit zu einer mittleren elektrischen Oberflächenleitfähigkeit über den Gesamtbeschichtungsbereich bei. Die elektrische Leitfähigkeit innerhalb der Haftschicht wird durch sich gegenseitig berührende Kohlenstoffnanoröhren vermittelt.

Eine verbesserte elektrische Leitfähigkeit weist eine solche anorganische Haftschicht auf, welche neben Kohlenstoffnanoröhren zusätzlich weitere elektrisch leitfähige Partikel enthält.

Die anorganische und elektrisch leitfähige Haftschicht weist eine Thermostabilität von mindestens 600° C auf. Diese Temperatur liegt 100° C höher als die Maximaltemperatur, welche gewöhnlich bei mindestens einem Fertigungsschritt des Elektronenemitters erreicht wird.

In der vorliegenden Erfindung ist die anorganische und elektrisch leitfähige Haftschicht beispielsweise durch Brennen einer Schicht erzeugbar. Diese Haftschicht enthält dann folglich sinterbare Partikel, Kohlenstoffnanoröhren und wahlweise zusätzlich weitere leitfähige Partikel. Hierbei ist die Brenntemperatur so gewählt, dass die Ansinterung der sinterbaren Partikel ohne Bildung einer Schmelze erfolgt, sich die Nanostäbchen, insbesondere Kohlenstoffnanoröhren, als auch wahlweise zugefügte weitere elektrisch leitfähige Partikel nicht zersetzen, jedoch eine vollständige Zersetzung oder Verflüchtigung aller organischer Bestandteile der im Verfahrensschritt (I) aufgetragenen Schicht sichergestellt ist.

Die vorzugsweise in Form von Kohlenstoffnanoröhren vorliegenden Nanostäbchen sind in der elektrisch leitfähigen Haftschicht vor dem Verfahrensschritt (IV) statistisch verteilt. Vor dem Verfahrensschritt (IV) ragt eine nur vernachlässigbare Anzahl von Nanostäbchen aus der Haftschicht heraus.

In der Haftschicht sind die sinterbaren Partikel gerade nur so fest aneinandergesintert, dass im Verfahrensschritt (IV) nur der Anteil von der Beschichtungsoberfläche abgetragen wird, welcher aus lockerem Material und Verunreinigungen besteht. Nach dem Verfahrensschritt (IV) resultiert eine Oberfläche, aus welcher dann Kohlenstoffnanoröhren oder sonstigen Nanostäbchen mit einer anisotropen Vorzugsrichtung senkrecht zur Substratoberfläche herausragen.

Als geeignete sinterbare Partikel haben sich insbesondere solche aus anorganischen Oxiden, Mischoxiden und aus anorganischen Oxidmischungen erwiesen. Geeignete Oxide sind beispielsweise Siliciumdioxid, alkalihaltiges Siliziumdioxid, Zinnoxid, Bleioxid, Boroxid und Aluminiumoxid sowie Mischoxide und Mischungen davon.

Als zusätzliche elektrisch leitfähige Partikel eignen sich beispielsweise Partikel aus leitfähigem Kohlenstoff, wie Ruß, Graphit oder Graphen, oder Partikel aus Indiumzinnoxid oder Metallpartikel, wie beispielsweise aus Silber, Gold, Wolfram, Eisen oder Nickel, sowie Mischungen davon.

Nachfolgend wird auf die einzelnen Schritte und auf Weiterbildungen des vorgeschlagenen Verfahrens eingegangen.

Vorzugsweise wird in dem Verfahrensschritt (I) eine Paste, welche Nanostäbchen, insbesondere Kohlenstoffnanoröhren, und sinterbare Partikel enthält, mittels Siebdruck auf die Vorrichtung aufgebracht und danach zu einer anorganischen und elektrisch leitfähigen Haftschicht gebrannt. Hierbei sind die sinterbaren Partikel nach dem Brennen untereinander in mindestens einem Kontaktpunkt aneinandergesintert und vermitteln eine Haftung auf der Oberfläche der Vorrichtung.

Nach dem Brennvorgang im Verfahrensschritt (I) vermitteln die sinterbaren Partikel sowohl die Haftung der Haftschicht auf der Bauteiloberfläche als auch der Nanostäbchen in der Haftschicht selber.

Mit dem Siebdruckverfahren können auf die Oberfläche der Vorrichtung mit dem vorgeschlagenen Verfahren zusätzlich zwischen den einzelnen Verfahrensschritten (I) bis (IV) oder vorzugsweise nach dem Verfahrensschritt (IV) verschiedene Pastenmaterialien aufgebracht werden, um weitere elektronische Funktionen zu realisieren. Dies betrifft nicht nur elektrische Leiter, sondern auch beispielsweise Dielektrika, Kondensatoren, Widerstände, Spulen, Antennen, Dioden, Transistoren, Elektrolumineszenzkomponenten, Biosensoren und Einbettungskomponenten in Mehrschichtschaltungen. Für solche kombinatorischen Weiterentwicklungen hat sich daher als Substrat ein elektrisch isolierendes Material als vorteilhaft erwiesen, insbesondere aber keramische Materialien.

Die für den Siebdruck verwandte Paste enthält als funktionelle Komponenten neben Nanostäbchen und sinterbaren Partikeln vorzugsweise auch Carbid-bildende Partikel, ein organisches Dispergiermittel, ein organisches Lösemittel und wahlweise weitere leitfähige Partikel. Hierbei dienen das organische Dispergiermittel und das organische Lösemittel zur Verteilung der Kohlenstoffnanoröhren oder sonstigen Nanostäbchen und aller anderen enthaltenen Partikel. Nach dem Brennen enthält die Haftschicht. dann zusätzlich weitere leitfähige Partikel und Carbide.

Als organische Dispergiermittel eignen sich beispielsweise Polyvinylpyrrolidon, Ethylcellulose, Ethylenglycol und Natriumdodecylsulfat. Als organische Lösemittel eigenen sich beispielsweise Isopropanol, Ethanol, Aceton, N-Methyl-2-pyrrolidon, Butylkarbitolacetat, Terpineole und Dimethylformamid. Die organischen Dispergiermittel und organischen Lösemittel reagieren bei dem Brennvorgang in dem Verfahrensschritt (I) nach Anspruch 2 besonders vorteilhaft mit den Carbid-bildenden Partikeln zu Carbiden. Diese Carbide verbessern dann die Haftung der resultierenden anorganischen und elektrisch leitfähigen Haftschicht auf der Bauteiloberfläche. Geeignete Carbid-bildende Partikel sind beispielsweise aus Silicium, Titan und Eisen.

Als wahlweise zusätzlich zu der Paste zugesetzte leitfähige Partikel eignen sich insbesondere leitfähiger Kohlenstoff, wie Ruß, Graphit oder Graphen, oder Partikel aus Indiumzinnoxid oder Metallpartikel, wie beispielsweise aus Silber, Gold, Wolfram, Eisen oder Nickel, sowie Mischungen davon.

Alternativ können leitfähige Metallpartikel in der Haftschicht erzeugt werden, indem der Paste Metallnitrate zugesetzt werden. Diese unterstützen den Brennvorgang, indem sowohl das Metallkation als auch das Nitratanion organische Komponenten der Paste oxidieren. Hierbei wird das betreffende Metallkation zum Metall reduziert. Als besonders geeignet haben sich hierbei Nitrate der Metalle Eisen, Ruthenium, Nickel, Palladium, Platin, Kupfer, Silber und Gold erwiesen. Bei Nitraten der Metalle Eisen und Ruthenium bilden sich auch die entsprechenden Metallcarbide.

Für die Paste stellen der Gesamtfeststoffgehalt, die mittlere Partikelgröße und die Viskosität kritische Parameter dar. Gesamtfeststoffgehalt setzt sich aus den Gewichtsanteilen der Nanostäbchen, der leitfähigen Partikel und des Bindemittels zusammen. Der Gesamtfeststoffgehalt, bezogen auf das Gesamtgewicht der Paste, beeinflusst maßgeblich die Verwendbarkeit der Paste als Siebdruckmaterial als auch die Packungsdichte des gebrannten Films.

Bei dem Gesamtfeststoffanteil ist ein Optimum zu finden, bei dem die Paste einerseits noch hinreichend einfach in den Poren des Drucksiebes verteilt werden kann und andererseits die durch das Brennen erzeugte Haftschicht noch hinreichend dicht ist. Wenn der Gesamtfeststoffgehalt sehr hoch ist, lässt sich zwar eine besonders dichte Haftschicht erzeugen, jedoch ist für den Siebdruck eine entsprechend hohe Porengröße des Siebes erforderlich. Für das vorgeschlagene Verfahren hat sich daher ein Gesamtfeststoffgehalt von 10 bis 50 Gew. % als vorteilhaft erwiesen, insbesondere für die Erzeugung einer hohen Beschichtungsdicke der Haftschicht.

Die mittlere Korngröße aller enthaltenen Partikel beeinflusst ebenfalls die Siebfähigkeit der Paste und die Eigenschaften des gebrannten Films. Für die Siebfähigkeit der Paste sind zwar sehr kleine Partikel vorteilhaft, allerdings führen zu kleine Partikel zu einer zu hohen Packungsdichte des gebrannten Films. Eine mittlere Korngröße aller in der Paste enthaltenen Partikel von 0,1 µm bis 10 µm hat sich daher für das vorgeschlagene Verfahren als vorteilhaft erwiesen.

Je niedriger die Viskosität der Paste, umso kleiner kann die Porengröße des Drucksiebes gewählt werden. Bei zu niedriger Viskosität der Paste, insbesondere bei einem zu hohen Gewichtsanteil eines gewählten organischen Lösemittels oder Lösemittelgemisches, kann nur eine kleine Beschichtungsdicke der Haftschicht erzielt werden. Eine dynamische Viskosität von 10000 bis 100000 cP der Paste ist daher für das vorgeschlagene Verfahren besonders vorteilhaft.

Für das vorgeschlagenen Verfahren zur Herstellung von Elektronenemitter hat sich daher eine Paste als besonders vorteilhaft erwiesen, welche nicht mehr als 2 Gew. % Nanostäbchen, insbesondere Kohlenstoffnanoröhren, insgesamt nicht mehr als 20 Gew. % an Glaspartikeln, zusätzlichen leitfähigen Partikeln und Carbid-bildenden Elementen einer mittleren Korngröße von 0,1 µm bis 5 µm, bis zu 48,91 Gew. % Terpineole, bis zu 20,96 Gew. % Butylkarbitolacetat und bis zu 8,13 Gew. % Ethylcellulose enthält. Überraschend hat sich gezeigt, dass eine solche Paste auch zur Herstellung von dreidimensionalen leitfähigen Werkstücken durch generative Fertigungsverfahren, wie beispielsweise 3D-Druck, geeignet ist.

Bei dem vorgeschlagenen Verfahren erfolgt das Brennen der aufgetragenen Paste zu der Haftschicht bei einer schrittweisen Erhöhung der Temperatur auf bis zu 800° C. Hierfür ist eine Brenndauer gewählt, nach der die so erzeugte elektrisch leitfähige Haftschicht nur noch anorganische Bestandteile aufweist.

Als Polymermischung für den Verfahrensschritt (II) werden erfindungsgemäß flüssige Zubereitungen mit einem quervernetzbaren SiliconPolymer und mit einer Quervernetzungskomponente verwendet, welche die Haftschicht nicht anlösen, nicht mit den Kohlenstoffnanoröhren reagieren und im Verfahrensschritt (III) einen Elastomerfilm ausbilden. Der Verfahrensschritt (III) erfolgt je nach gewählter Polymermischung thermisch oder photochemisch. Der Elastomerfilm wird dann schließlich im Verfahrensschritt (IV) von dem Gesamtbeschichtungsbereich abgezogen.

Mit dieser weiterentwickelten Methode wird besonders vorteilhaft über den gesamten Beschichtungsbereich, auch an schwer zugänglichen Teilbereichen und tiefen Mulden, die im Verfahrensschritt (I) aufgebrachte Beschichtung in den Verfahrensschritten (II) bis (IV) in der Art nachbehandelt, dass aus der Haftschicht herausragende Kohlenstoffnanoröhren aufrecht ausgerichtet sind. Zusätzlich werden mit dem Abziehen des Elastomerfilms im Verfahrensschritt (IV) Verunreinigung von der Oberfläche der Beschichtung entfernt. Weiter ist mit dem vorgeschlagenen Verfahren die Entfernung von Verunreinigungen und die aufrechte Ausrichtung von Kohlenstoffnanoröhren auf solchen Beschichtungsbereichen erzielbar, welche uneben sind oder eine komplexe Geometrie aufweisen.

Für die Polymermischung für den Verfahrensschritt (II) wird erfindungsgemäß eine Mischung verwendet, welche bei 20° C flüssig ist und aus einer Mischung von zwei Komponenten besteht. Hierbei enthält die eine Komponente ein quervernetzbares Silicon-Polymer und die andere Komponente ein Quervernetzungsreagenz. Ein geeignetes quervernetzbares Silicon-Polymer ist beispielsweise Polydimethylsiloxan. Beide Komponenten werden vorzugsweise kurz vor Durchführung des Verfahrensschrittes (II) angemischt und beispielsweise entweder durch Ausgießen, Aufpinseln oder Spin-Coating über die Gesamtbeschichtungsfläche aufgetragen. Es haben sich hierbei besonders solche Polymermischungen bewährt, welche in dem Verfahrensschritt (III) thermisch zu einem Elastomerfilm ausgehärtet werden.

Solche Komponenten für die Erzeugung des Elastomerfilms sind beispielsweise in Form von Zweikomponenten-Sets unter der Bezeichnung: SYLGRAD 184 der Firma Dow Corning Inc. im Handel erhältlich, wobei die das quervernetzbare Silicon-Polymer enthaltene Komponente mit der das Quervernetzungsreagenz enthaltenen Komponente angemischt wird.

Mit diesen Varianten ist das vorgeschlagene Verfahren besonders gut reproduzierbar. Die chemische Zusammensetzung der anorganischen und elektrisch leitfähigen Haftschicht ändert sich nach Durchführung der Verfahrensschritte (II) bis (IV) nicht. Besonders vorteilhaft kann das vorgeschlagene Verfahren als automatisierter Fertigungsprozess durchgeführt werden, insbesondere wenn die Paste in dem Verfahrensschritt (I) mittels Siebdruck auf die Vorrichtung aufgebracht wird.

Nachfolgend wird auf den mit dem vorgeschlagenen Verfahren hergestellten Elektronenemitter und dessen Weiterbildungen eingegangen.

Über den Gesamtbeschichtungsbereich weisen nach Durchführung des Verfahrensschrittes (IV) die elektrisch leitfähige Haftschicht eine mittlere Teilschichtdicke h von 3 µm bis 20 µm und die aus der Haftschicht herausragenden Enden der vorzugsweise als Kohlenstoffnanoröhren ausgebildeten Nanostäbchen eine mittlere Differenzlänge *i* von 0,1 µm bis 10 µm auf, wobei die Nanostäbchen über die Haftschicht fest mit der Oberfläche der Vorrichtung verbunden sind. Die mittlere Beschichtungsdicke d über den Gesamtbeschichtungsbereich setzt sich aus der Summe der mittleren Teilschichtdicke h und der mittleren Differenzlänge *i* zusammen und beträgt folglich 3,1 µm bis 30 µm.

Wesentlich für die Emission sind diejenigen Kohlenstoffnanoröhren beziehungsweise sonstigen zur Emission von Elektronen geeigneten Nanostäbchen, welche aus der Haftschicht herausragen. Kohlenstoffnanoröhren oder Nanostäbchen beliebiger anderer Zusammensetzung, welche vollständig von der elektrisch leitfähigen Haftschicht umschlossen sind, tragen nur unwesentlich zur Emission von Elektronen bei.

Ragen zu wenige Kohlenstoffnanoröhren beziehungsweise andere Nanostäbchen aus der elektrisch leitfähigen Haftschicht heraus, so resultiert eine verringerte Emissionsleistung. Nehmen aber die aus der Haftschicht herausragenden und aufrecht ausgerichteten Nanostäbchen, insbesondere Kohlenstoffnanoröhren, einen zu geringen Abstand zueinander ein, so führt dies zu einer erheblichen Verminderung der elektrischen Feldstärke an den herausragenden Enden der Kohlenstoffnanoröhren. Somit führt eine zu hohe Anzahl von aus der Haftschicht herausragenden und aufrecht ausgerichteten Nanostäbchen ebenfalls zu einer verringerten Emissionsleistung.

Der mit dem vorgeschlagenen Verfahren hergestellte Elektronenemitter weist dann eine hohe Emissionsleistung auf, wenn dieser eine mittlere Anzahl n aus der Haftschicht herausragender Nanostäbchen, insbesondere Kohlenstoffnanoröhren, in hauptsächlicher aufrechter Ausrichtung von 10⁴ bis 10⁶ pro mm² über den gesamten Beschichtungsbereich enthält. Unter einer hauptsächlich aufrechten Ausrichtung von Nanostäbchen wird daher im vorliegenden Fall eine Ausrichtung verstanden, bei der auf die Bauteiloberfläche aufgebrachten Nanostäbchen mit einer maximalen Abweichung von 45° senkrecht auf einer Tangente an deren jeweiligen Anhaftungspunkt angeordnet sind. Unter dem Anhaftungspunkt wird in der vorliegenden Erfindung der Schnittpunkt der mittleren geometrischen Längsachse der betreffenden Nanostäbchen mit der Oberfläche des Substrates verstanden.

Für eine hohe Emissionsleistung ist weiter ein mittlerer elektrischer Flächenwiderstand *R_{FM}* von nicht mehr als 1 Ω über den Gesamtbeschichtungsbereich erforderlich, wobei sich der mittlere elektrische Flächenwiderstand *R_{FM}* auf die mittlere Beschichtungsdicke d bezieht. Dieser kritische mittlere elektrische Flächenwiderstand *R_{FM}* von 1 Ω wird bei dem mit dem vorgeschlagenen Verfahren hergestellten Elektronenemitter nicht überschritten.

Es hat sich bei dem vorgeschlagenen Elektronenemitter gezeigt, dass pro Teilbeschichtungsbereich einer Größe von mindestens 10⁻⁸ mm² die Beschichtungsdicke, die Anzahl der aus der Haftschicht herausragenden Nanostäbchen in aufrechter Ausrichtung pro mm² und der elektrische Flächenwiderstand *R_{F}* um nicht mehr als 25 % von den Mittelwerten d, *n* und *R_{FM}* abweichen. Dies ermöglicht den Bau von Elektronenemittern mit einer hohen konstanten Leistungsdichte auf dem Gesamtbeschichtungsreich der Vorrichtung. Folglich sind auf dem Gesamtbeschichtungsbereich aufgrund dieser sehr regelmäßigen Oberflächenbeschaffenheit auch die Bildung von Hot Spots und Funkenüberschläge minimiert; somit weist der vorgeschlagene Elektronenemitter auch eine besonders lange Lebensdauer auf.

Die Leistungsfähigkeit des vorgeschlagenen Elektronenemitters lässt sich weiter verbessern, wenn das Verhältnis von mittlerer Teilschichtdicke h zu der mittleren Differenzlänge *i* einen Wert von 1 bis 3 beträgt. Bezüglich Materialersparnis und gewünschter hoher Leitfähigkeit hat es sich für den vorgeschlagenen Elektronenemitter als besonders vorteilhaft erwiesen, wenn über den Gesamtbeschichtungsbereich die elektrisch leitfähige Haftschicht eine mittlere Teilschichtdicke h von 3 µm bis 15 µm und die aus der Haftschicht herausragenden Enden der Nanostäbchen, insbesondere Kohlenstoffnanoröhren, eine mittlere Differenzlänge *i* von 3 µm bis 5 µm aufweisen.

In einer weiteren vorteilhaften Ausgestaltung des vorgeschlagenen Elektronenemitters enthält die Beschichtung mehrwandige Kohlenstoffnanoröhren mit einem äußeren Durchmesser von 2 nm bis 20 nm und einer Länge von 1 µm bis 10 µm. Vorzugsweise werden hierzu mehrwandige Kohlenstoffnanoröhren verwandt, welche durch ein Bogenentladungsverfahren hergestellt sind. Solche durch ein Bogenentladungsverfahren hergestellte Kohlenstoffnanoröhren weisen eine sehr regelmäßige nadelförmige Struktur mit nur wenigen Krümmungen auf. Mit diesen kombinatorischen Weiterentwicklungen des vorgeschlagenen Elektronenemitters lässt sich dessen Emissionsleistung weiter steigern.

Nachfolgend ist ein Ausführungsbeispiel des vorgeschlagenen Verfahrens zur Herstellung eines Elektronenemitters mit einer Kohlenstoffnanoröhren enthaltenden Beschichtung dargelegt.

Hierzu ist die Zubereitung einer für den Verfahrensschritt (I) geeigneten, siebdruckfähigen Paste vorangestellt.

In einen Mischbehälter werden 2 Gew. % einer Mischung aus Kohlenstoffnanoröhren, 16 Gew. % Glaspartikel, 2 Gew. % Silberpartikel, 2 Gew. % Siliciumpartikel, 48,91 Gew. % Terpineol, 20,96 Gew. % Butylkarbitolacetat und 8,13 Gew. % Ethylcellulose eingewogen und vermischt. Die Ethylcellulose löst sich bei dem Mischen in Terpineol.

Die Mischung aus Kohlenstoffnanoröhren enthält 86 Gew. % mehrwandige Kohlenstoffnanoröhren mit einem äußeren Durchmesser von 2 nm bis 20 nm und einer Länge von 1 µm bis 10 µm, einwandige Kohlenstoffnanoröhren und andere Bestandteile aus Kohlenstoff. Diese Mischung ist durch ein Bogenentladung-Verfahren hergestellt.

Diese Mischung wird durch ein Dreiwalzwerk geleitet, wobei der Walzvorgang solange zyklisch geführt wird, bis alle Partikel eine mittlere Korngröße von 0,1 µm bis 5 µm und aufweisen. Alternativ zum Walzwerk kann eine Kugelmühle verwandt werden.

Nachfolgend ist beispielhaft die Durchführung des Verfahrensschrittes (I) zur Aufbringung von Kohlenstoffnanoröhren über eine elektrisch leitfähige Haftschicht näher erläutert.

Die Paste wird auf die Oberfläche der Vorrichtung aus gesintertem Aluminiumoxid, welche als Bauteil für einen Elektronenemitter vorgesehen ist, in einem Gesamtbeschichtungsbereich mittels Siebdruck aufgebracht. Danach wird die bedruckte Vorrichtung für 15 Minuten ruhen gelassen. So wird eine bessere Haftung der Paste auf der Oberfläche erzielt und die durch Siebdruck erzeugte Beschichtung vorgetrocknet. Die Vorrichtung wird dann unter aeroben Bedingungen bei 150° C solange erwärmt, bis alle bei dieser Temperatur flüchtigen Bestandteile der aufgebrachten Paste entwichen sind. Hierfür ist ein Zeitraum von 10 Minuten bis 30 Minuten erforderlich.

Danach wird die Vorrichtung unter Inertgas, beispielsweise unter Stickstoff oder Argon, schrittweise innerhalb von 30 Minuten von 300° C auf 400° C erhitzt. Hierbei zersetzt sich ein Großteil aller organischen Komponenten.

Anschließend wir die Vorrichtung unter einem Vakuum von mindestens 10⁻⁵ torr schrittweise von 650° C auf 800° C erhitzt, um sämtliche organische Komponenten zu zersetzen und die sinterbaren Partikel, in diesem Ausführungsbeispiel Glas, aneinander anzusintern. Hierbei wird eine Heizrate von mindestens 30 Minuten gewählt. Es resultiert eine anorganische und elektrisch leitfähige Schicht, in welcher Kohlenstoffnanoröhren eingebettet sind und mit der die Verfahrensschritte (II) bis (IV) durchführbar sind. Wird die Heizrate auf mehr als 60 Minuten verlängert, so resultiert eine Schicht mit einer zu hohen Packungsdichte oder gar die vollständige Schmelze der Glaspartikel.

Nachfolgend werden die Durchführung der Verfahrensschritte (II) bis (IV) zur Erzeugung einer solchen anorganischen und elektrisch leitfähigen Haftschicht näher erläutert, aus welcher Kohlenstoffnanoröhren in hauptsächlich aufrechter Ausrichtung herausragen.

Zur Erzeugung eines Elastomerfilms wird eine Polymermischung verwandt, welche aus zwei Komponenten eines Zweikomponenten-Sets der Bezeichnung: SYLGRAD 184 der Firma Dow Corning Inc. hergestellt wird. Hierbei wird die das quervernetzbare Silicon-Polymer enthaltene Komponente mit der das Quervernetzungsreagenz enthaltenen Komponente im Volumenverhältnis von zehn zu eins homogen angemischt. Diese Mischung wird dann möglichst rasch nach deren Zubereitung auf den Gesamtbeschichtungsbereich vollständig mittels Spin-Coating aufgetragen.

Der so nach dem Verfahrensschritt (II) entstandene Polymerfilm wird unter Erwärmung auf 70° C innerhalb einer Stunde zu einem Elastomerfilm ausgehärtet. Der so nach dem Verfahrensschritt (III) ausgehärtete Elastomerfilm wird in dem Verfahrensschritt (IV) händisch abgezogen, wobei aus der elektrisch leitfähigen Haftschicht herausragende Kohlenstoffnanoröhren über den Gesamtbeschichtungsbereich hauptsächlich aufrecht ausgerichtet vorliegen.

Der Gesamtbeschichtungsbereich der Vorrichtung ist nach der Durchführung aller Verfahrensschritte (I) bis (IV) und der abgeschlossenen Fertigung des Elektronenemitters für die Emission von Elektronen vorgesehen. Der so in diesem Ausführungsbeispiel erhaltene Elektronenemitter ist als Kathode für die Verwendung in einer Röntgenröhre vorgesehen.

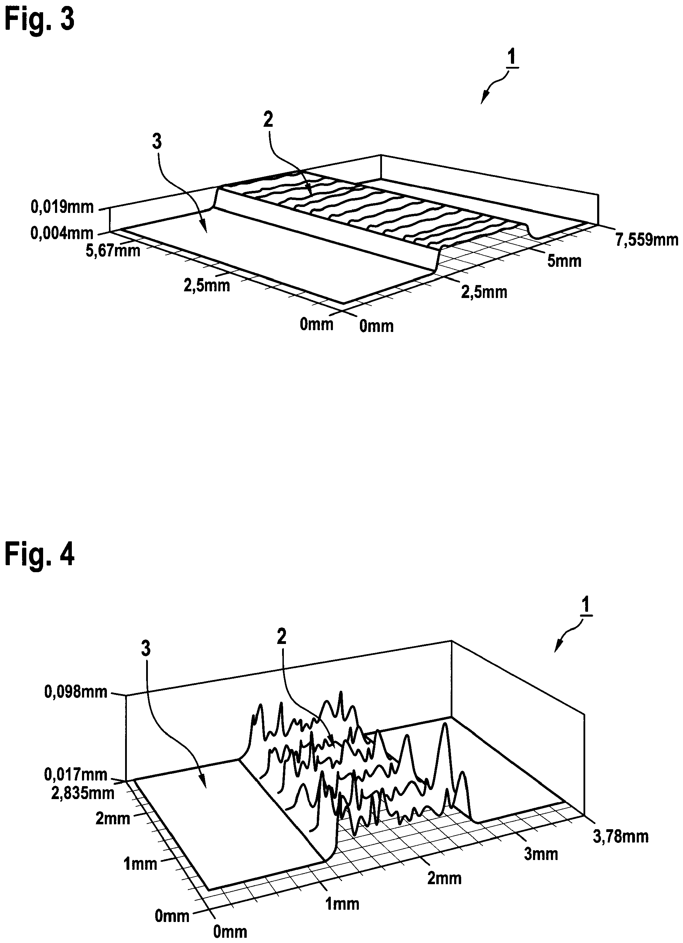

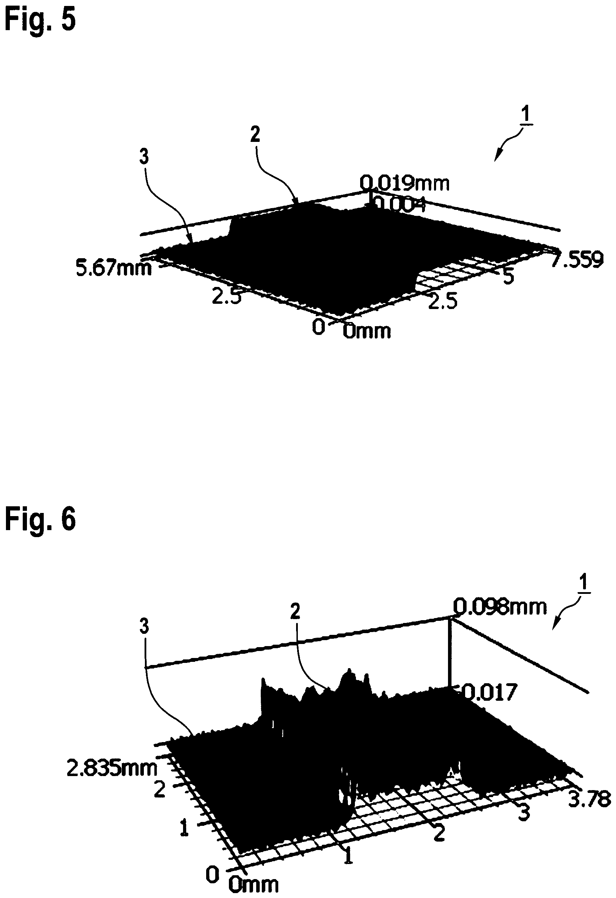

Nachfolgend werden verschiedene Ausgestaltungen des mit dem erfindungsgemäßen Verfahren hergestellten Elektronenemitters sowie ein Vergleichsbeispiel (Figuren 4, 6) anhand einer Zeichnung näher erläutert. Hierin zeigen:
- Fig. 1: einen Querschnitt durch einen Elektronenemitter **1** mit einer Kohlenstoffnanoröhren enthaltenden Beschichtung **2**;
- Fig. 2: drei aufrecht ausgerichtete Kohlenstoffnanoröhren **7** des Elektronenemitters 1 nach Fig. 1 im Querschnitt in vergrößerter Ansicht;
- Fig. 3: den auf einer Bauteiloberfläche **3** befindlichen Elektronenemitter **1** nach Fig. 1 in dreidimensionaler, leicht vereinfachter Liniendarstellung;
- Fig. 4: einen Elektronenemitter **1** eines Vergleichsbeispiels in einer Ansicht analog Fig. 3,
- Fig. 5: eine dreidimensionale Aufnahme des Elektronenemitters **1** nach Fig. 3,
- Fig. 6: den Elektronenemitter **1** nach Fig. 4 in einer Aufnahme entsprechend Fig. 5,
- Fig. 7: den Elektronenemitter **1** nach den Fig. 1, 3 und 5 in einer weiteren dreidimensionalen, realitätsgetreuen Darstellung,
- Fig. 8: den Elektronenemitter **1** nach Fig. 1 in Draufsicht,
- Fig. 9: ein gemessenes Profil des Elektronenemitter **1** nach den Fig. 7,
- Fig. 10: elektronenmikroskopische Aufnahmen des Elektronenemitters **1** nach den Fig. 7,
- Fig. 11: in einem Diagramm Kennlinien von drei Elektronenemittern **1** gleicher Bauart,
- Fig. 12: eine Draufsicht auf einen der gleich dimensionierten Elektronenemitter **1** nach Fig. 11,
- Fig. 13: in einem Diagramm die Emissionsstabilität der drei Elektronenemitter **1** nach Fig. 11,
- Fig. 14: gemessene Betriebsparameter der Elektronenemitter **1** nach Fig. 11,
- Fig. 15: in einem Diagramm analog Fig. 13 das gemessene Betriebsverhalten eines weiteren Elektronenemitters **1**,
- Fig. 16: während eines Pulses von 250 ms Dauer gemessene Strom- und Spannungswerte beim Betrieb des Elektronenemitters **1** nach Fig. 15.

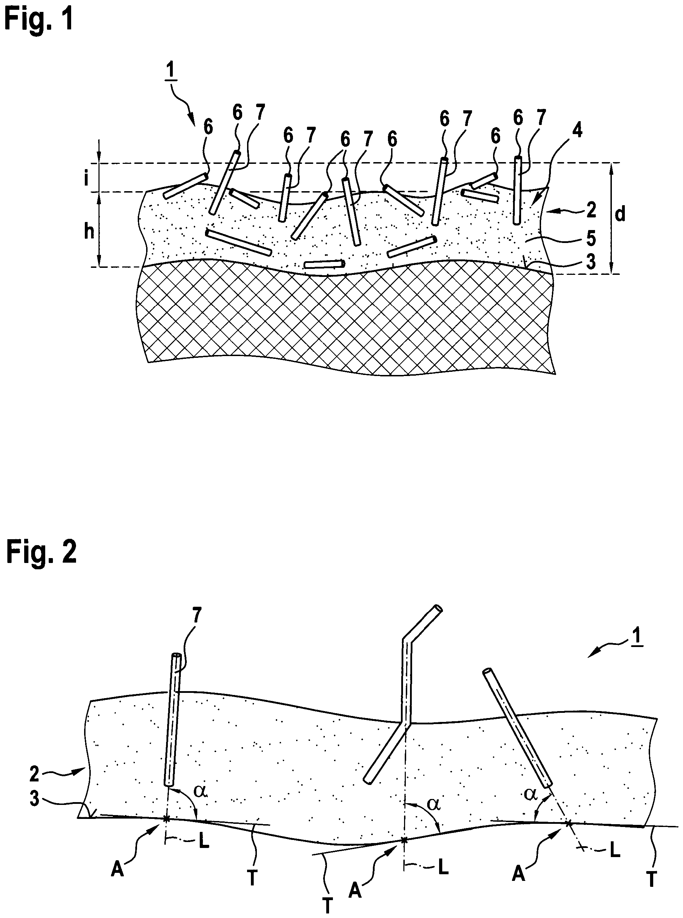

Die Fig. 1 zeigt einen Querschnitt durch einen Bereich des Gesamtbeschichtungsbereiches des Elektronenemitters **1**, welcher durch die zuvor dargelegten beispielhaften Verfahrensschritte (I) bis (IV) hergestellt wurde. Die Beschichtung **2** auf der Bauteiloberfläche **3** weist Kohlenstoffnanoröhren **4** auf, wobei in der Beschichtung **2** mehrwandige Kohlenstoffnanoröhren mit einem äußeren Durchmesser von 2 nm bis 20 nm und einer Länge von 1 µm bis 10 µm enthalten sind. Die Beschichtung **2** mit einer mittleren Beschichtungsdicke ***d*** von 13 µm besteht aus der elektrisch leitfähige Haftschicht **5** mit einer mittleren Teilschichtdicke ***h*** von 10 µm und aus der Haftschicht herausragenden Kohlenstoffnanoröhren mit den Enden **6.** Die Enden **6** der Kohlenstoffnanoröhren weisen einen mittleren Differenzabstand ***i*** von 3 µm zur Haftschicht **5** auf. Somit setzt sich mittlere Beschichtungsdicke ***d*** aus der Summe der Teilschichtdicke ***h*** und dem mittleren Differenzabstand ***i*** zusammen. Die Größen ***d**, **h*** und ***i*** erstrecken sich über den Gesamtbeschichtungsbereich.

Der Elektronenemitter **1** weist über den Gesamtbeschichtungsbereich eine mittlere Anzahl *n* aus der elektrisch leitfähigen Haftschicht herausragenden und hauptsächlich aufgerichteten Kohlenstoffnanoröhren **7** von 10⁵ pro mm² sowie einen mittleren elektrische Flächenwiderstand *R_{FM}* von 0,5 Ω auf. Die Größen n und *R_{FM}* erstrecken sich somit ebenfalls über den Gesamtbeschichtungsbereich.

Pro Teilbeschichtungsbereich einer Größe von 10⁻⁸ mm² weichen die Beschichtungsdicke, die Anzahl der aus der Haftschicht herausragenden Kohlenstoffnanoröhren in hauptsächlich aufrechter Ausrichtung pro m² und der elektrische Flächenwiderstand *R_{F}* um nicht mehr als 25 % von den Mittelwerten *d, n* und *R_{FM}* ab.

Die Haftschicht **5** weist als Bestandteile mehrwandige Kohlenstoffnanoröhren mit einem äußeren Durchmesser von 2 nm bis 20 nm und einer Länge von 1 µm bis 10 µm, einwandige Kohlenstoffnanoröhren mit einem äußeren Durchmesser von 0,4 nm bis 4 nm und einer Länge von 1 µm bis 10 µm, andere Bestandteile aus Kohlenstoff, Silberpartikel und Siliciumcarbid auf. Als weiteren, charakteristischen Bestandteil enthält die Haftschicht **5** solche Glaspartikel, welche untereinander in mindestens einem Kontaktpunkt aneinandergesintert sind. Die Haftschicht **5** ist durch Ansinterung der Glasartikel auf der Oberfläche der Vorrichtung fest angebunden. Hierbei liegen zwischen diesen aneinandergesinterten Glaspartikeln die Kohlenstoffnanoröhren fest ein. Die Beschichtung **2** weist eine Thermostabilität von 650° C auf.

Die Fig. 2 zeigt drei hauptsächlich aufrecht ausgerichtete Kohlenstoffnanoröhren **7** des Elektronenemitters **1** im Querschnitt in vergrößerter Ansicht. Links ist in der Fig. 2 eine hauptsächlich aufrecht ausgerichtete Kohlenstoffnanoröhre **7** zu sehen, welche senkrecht, das heißt, mit einem Winkel **α** von 90°, auf einer Tangente **T** an einem Anhaftungspunkt **A** angeordnet ist. Hierbei ist der Anhaftungspunkt **A** durch den Schnittpunkt der mittleren geometrischen Längsachse **L** der Kohlenstoffnanoröhre **7** mit der Bauteiloberfläche **3** gegeben. In der Mitte der Fig. 2 ist eine hauptsächlich aufrecht ausgerichtete Kohlenstoffnanoröhre **7** dargestellt, welches mit dem Winkel **α** von 80° zu der Tangente **T** angeordnet ist. Rechts in der Fig. 2 ist eine hauptsächlich aufrecht ausgerichtete Kohlenstoffnanoröhre **7** mit dem Winkel **α** von 60° zu der Tangente **T** dargestellt.

Die Fig. 3 zeigt in leicht schematisierter Weise die dreidimensionale Struktur der Beschichtung **2,** welche sich auf der Bauteiloberfläche **3** befindet. Wie aus der Darstellung hervorgeht, ist durch die Beschichtung **2,** in welcher die Kohlenstoffnanoröhren **7** eingebettet sind, eine annähernd ebene, zur Bauteiloberfläche **3** parallele Oberfläche gebildet. Eine solche Oberfläche ist beim Vergleichsbeispiel nach Fig. 4, welche eine zwar Kohlenstoffnanoröhren enthaltende, jedoch nicht nach dem erfindungsgemäßen Verfahren hergestellte Beschichtung **2** veranschaulicht, nicht einmal näherungsweise gegeben. Dies hat maßgebliche Einflüsse auf verschiedene beim Betrieb eines Elektronenemitters **1** in einer röntgentechnischen Anlage relevante Parameter.

Ein besonderer Vorteil der erfindungsgemäßen Beschichtung **2,** wie sie in den Figuren 1 bis 3 visualisiert ist, liegt in der hohen Emissionsstabilität. Beispielsweise ist der diese Beschichtung **2** aufweisende Elektronenemitter **1** in der Lage, über eine Betriebsdauer von insgesamt mehreren 100 Stunden definierte Pulse von jeweils 100 µm Dauer, welche mit einer Frequenz von 20 Hz generiert werden, ohne signifikante Änderung der Gitterspannung, welche im Bereich von ca. 0,5 kV liegt, zu erzeugen.

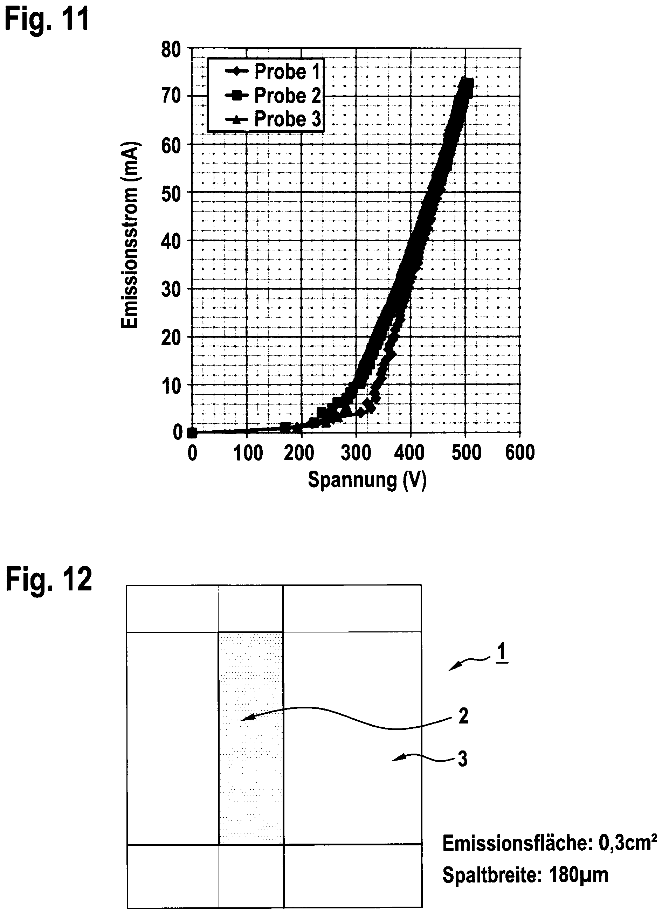

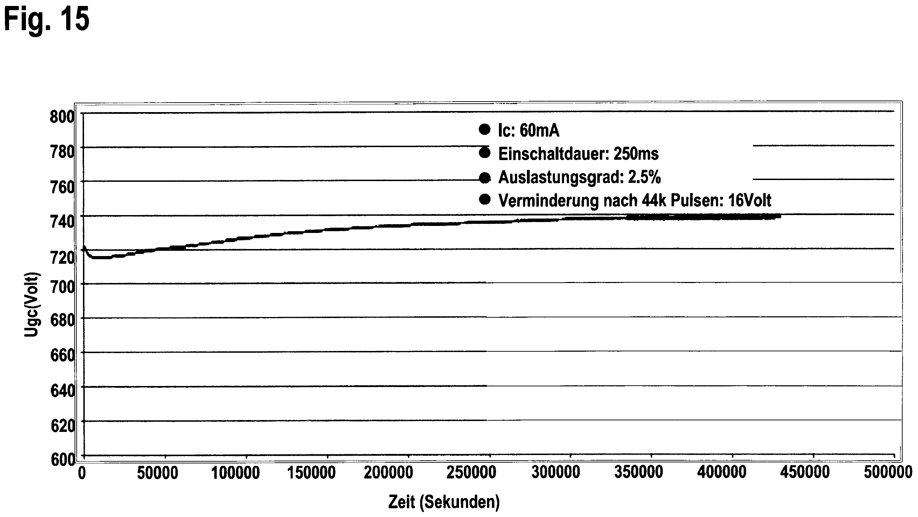

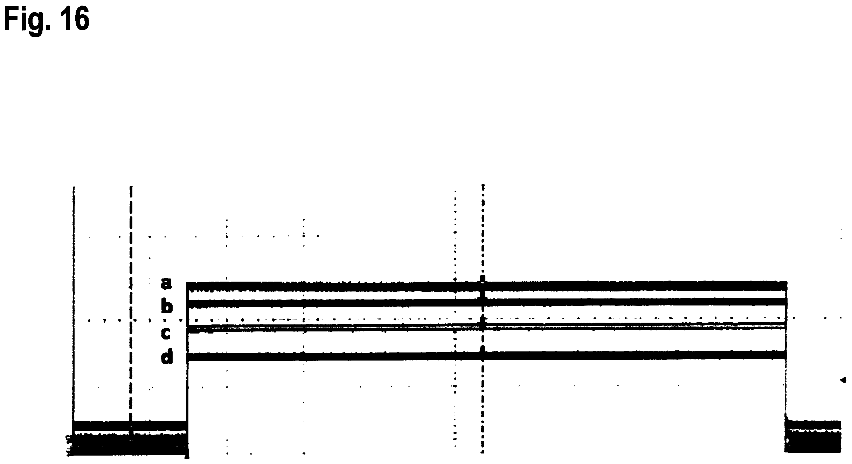

Im Folgenden wird auf reale Messdaten verwiesen, welche den in Fig. 3 vereinfacht dargestellten Elektronenemitter **1** (Fig. 5, 7 ,8 ,9, 10), eine Gruppe dreier als gleichartige Proben bereitgestellter Elektronenemitter **1** (Fig. 11 - 14), sowie einen weiteren Elektronenemitter **1** (Fig. 15, 16) betreffen.

Die Fig. 5 zeigt die tatsächliche, gemessene Oberflächenmorphologie des in Fig. 1 in einer Liniendarstellung veranschaulichten Elektronenemitters **1.** Gut erkennbar ist auch in Fig. 5 die annähernd quaderförmige Gestalt der Beschichtung **2.** Die Fig. 6 zeigt zum Vergleich, wobei die Daten genauso wie im Fall von Fig. 5 gewonnen wurden, das bereits anhand Fig. 4 diskutierte konventionelle Vergleichsbeispiel.

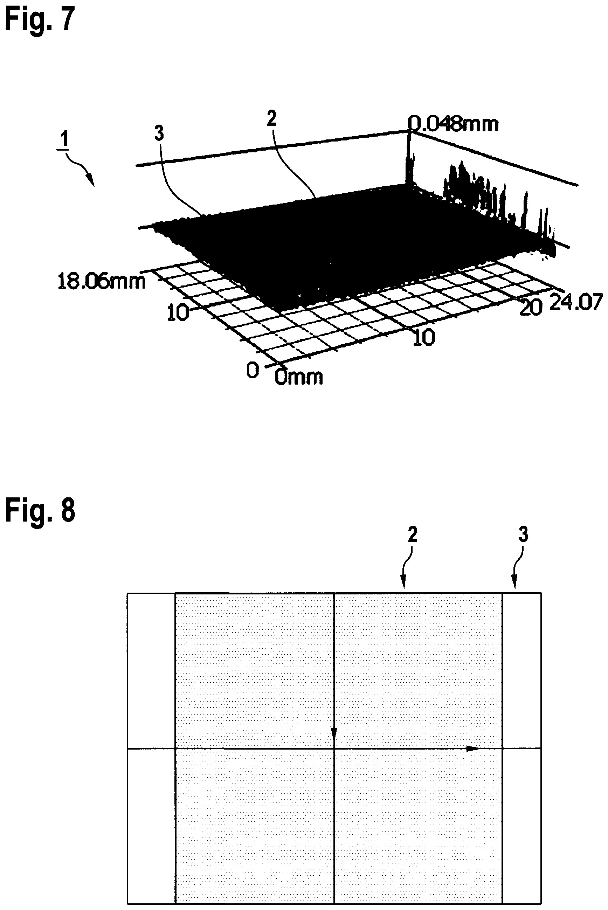

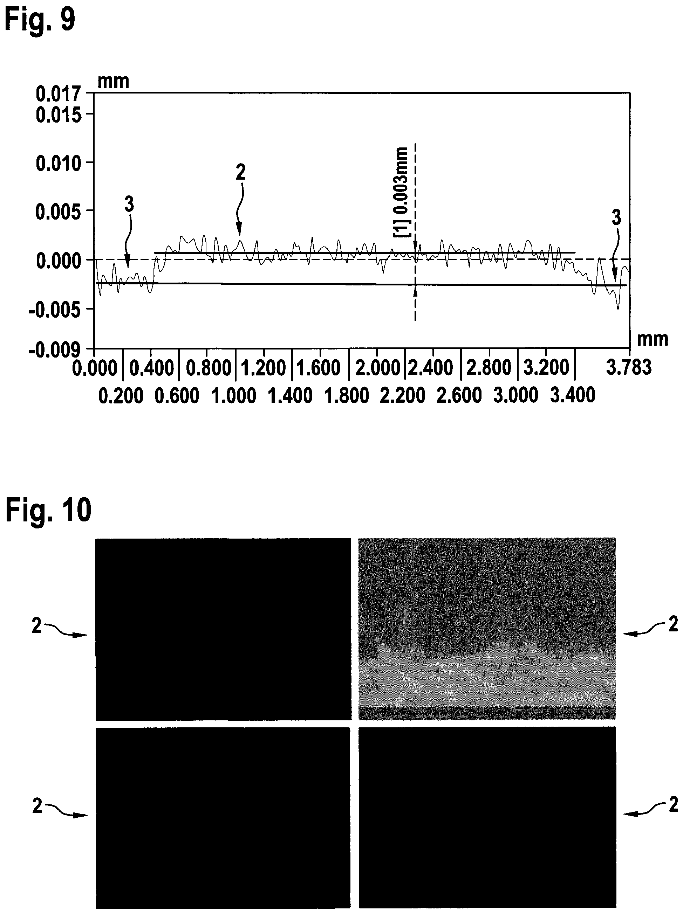

Weitere geometrische Daten des Elektronenemitters **1** nach Fig. 5 sind den Figuren 7 bis 9 entnehmbar. Aus Fig. 9 geht die näherungsweise einheitliche Dicke der Beschichtung **2** von 0,003 mm hervor. Ergänzend sind als Fig. 10 vier rasterelektronenmikroskopische Aufnahmen der Beschichtung **2** beigefügt.

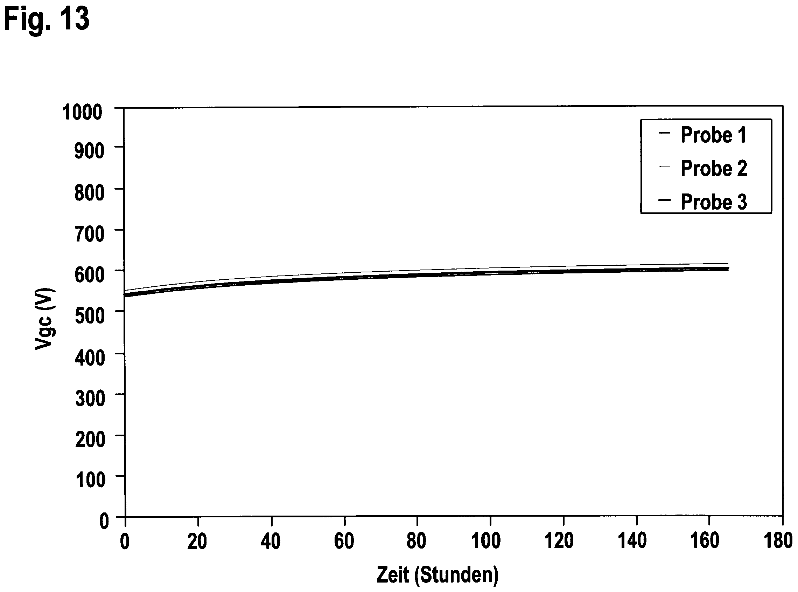

Die Figuren 11 bis 14 beziehen sich auf drei Proben (sample 1, 2, 3), welche von ihrem prinzipiellen Aufbau her dem Ausführungsbeispiel nach Fig. 1 entsprechen und vergleichenden Tests unterzogen wurden. In Fig. 11 ist die Abhängigkeit des in mA angegebenen Emissionsstroms von der Spannung, mit welcher die Elektronenemitter **1** betrieben werden, sichtbar. Wie aus der Darstellung hervorgeht, ist nur eine geringe Streuung zwischen den einzelnen Proben gegeben. Was die in Fig. 13 dargestellte Langzeitstabilität betrifft, sind sowohl nahezu gleiche Eigenschaften der drei einzelnen Elektronenemitter **1** als auch eine nur geringe Zeitabhängigkeit der zum Betrieb der Elektronenemitter **1** erforderlichen Gitterspannung Vgt von der Betriebsdauer gegeben. Im vorliegenden Fall wurden durch die Elektronenemitter **1** Pulse von 100 µm Dauer mit einer Wiederholfrequenz von 20 Hz emittiert. Der Versuch wurde, wie aus Fig. 13 hervorgeht, über eine Gesamtdauer von mehr als 160 Stunden durchgeführt. Der Emissionsstrom betrug 60 mA.

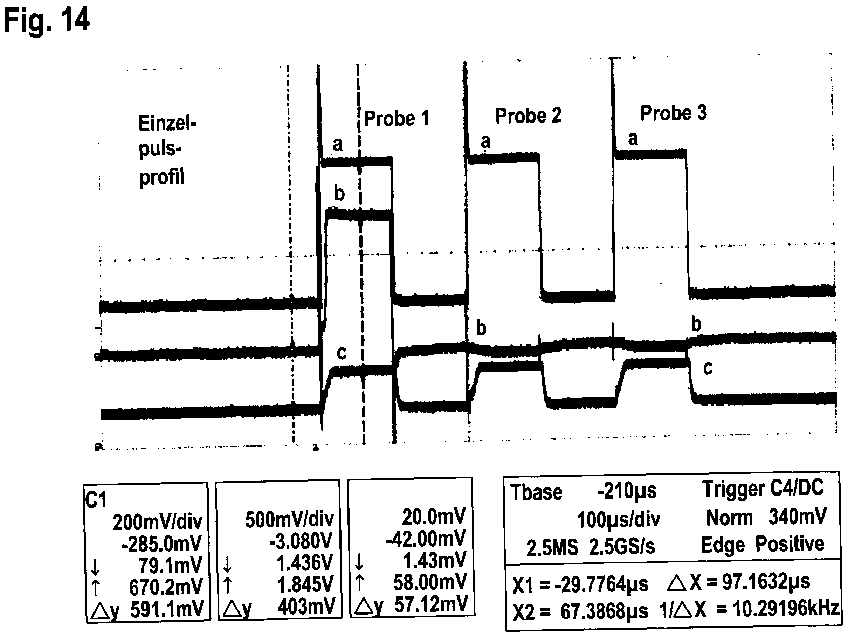

In Fig. 14 ist sind als Kurve a einzelne Emissionspulse der drei Elektronenemitter **1** (jeweils 60 mA) gut erkennbar. Die als drei Proben (sample 1, sample 2, sample 3) vorliegenden Elektronenemitter **1** wurden, wie aus Fig. 14 hervorgeht, nacheinander angesteuert. Lediglich im Fall des ersten Elektronenemitters **1** (sample 1) wurde, als Rechteckpuls der Kurve b erkennbar, elektrische Spannung zwischen Gitter und Emitter mit einem externen Gerät gemessen. Diese Messung diente lediglich Kontrollzwecken und wurde bei der zweiten und dritten Probe nicht wiederholt. Bei allen drei Proben wurde dagegen die zwischen Gitter und Emitter anliegende Spannung (Kurve c) mit Hilfe der Ansteuerelektronik, welche sämtlich Elektronenemitter **1** ansteuert, erfasst. Wie der Darstellung entnehmbar ist, treten praktisch keine Unterschiede zwischen den bei Ansteuerung der verschiedenen Elektronenemitter **1** erfassten Spannungswerten auf.

Die Figuren 15 und 16 beziehen sich auf einen weiteren Elektronenemitter **1,** welcher ebenfalls alle der bereits anhand der Figuren 1 bis 4 erläuterten Merkmale aufweist. Im Fall von Fig. 15 und 16 wird der Elektronenemitter **1** mit Pulsen einer Dauer von jeweils 250 ms betrieben. Der Testbetrieb dauerte deutlich über 100 Stunden. Auch in diesem Fall ist lediglich eine geringe Abhängigkeit der hier mit Ugc bezeichneten Gitterspannung von der Betriebsdauer gegeben. Von besonderem Vorteil hinsichtlich der Langlebigkeit des Elektronenemitters **1** ist die Tatsache, dass sich der Anstieg der Gitterspannung Ugc im Laufe des Betriebs immer weiter verlangsamt, also eine Sättigung erreicht wird.

In Fig. 16 sind verschiedene, während eines einzigen Pulses von 250 ms Dauer aufgenommene Messwerte aufgezeigt. Bei der Kurve a handelt es sich um die zwischen dem Elektronenemitter **1** und dem zugehörigen Extraktionsgitter anliegende elektrische Spannung, welche mit Hilfe einer Ansteuerelektronik sowohl erzeugt als auch gemessen wurde. Die Kurve b gibt die Spannung zwischen denselben Elementen, jedoch mit Hilfe einer externen Sonde gemessen (wie Kurve b in Fig. 14), an. In vergleichbarer Weise wurde der als Kurve c in Fig. 16 eingetragene Emissionsstrom mit Hilfe einer gesonderten Messvorrichtung erfasst. Im Unterschied hierzu zeigt die Kurve d den mittels der Ansteuerelektronik sowohl erzeugten als auch gemessenen Emissionsstrom des Elektronenemitters **1.**

### Bezugszeichenliste

- 1: Elektronenemitter
- 2: Beschichtung
- 3: Bauteiloberfläche
- 4: Nanostäbchen, Kohlenstoffnanoröhre
- 5: anorganische und elektrisch leitfähige Haftschicht
- 6: aus der Haftschicht herausragenden Enden der Kohlenstoffnanoröhren
- 7: aus der elektrisch leitfähigen Haftschicht herausragende und hauptsächlich aufrecht ausgerichtete Kohlenstoffnanoröhren
weitere, in Fig. 2 verwendete Bezeichnungen:
- *d*: mittlere Beschichtungsdicke
- *h*: mittlere Teilschichtdicke
- *i*: mittlerer Differenzabstand
- α: Winkel
- T: Tangente
- A: Anhaftungspunkt
- L: mittlere geometrische Längsachse

## Patentansprüche

1. Verfahren zur Herstellung eines Elektronenemitters (1) mit einer Nanostäbchen (4, 7) enthaltenden Beschichtung (2) auf einer Bauteiloberfläche (3), welches folgende Schritte aufweist:
(I) Aufbringung von Nanostäbchen (4, 7) auf den Gesamtbeschichtungsbereich über eine anorganische und elektrisch leitfähige Haftschicht (5);
(II) Auftragen einer flüssigen Polymermischung auf den Gesamtbeschichtungsbereich,
wobei die Polymermischung ein quervernetzbares Polymer und eine Quervernetzungskomponente enthält;
(III) Aushärtung des nach dem Verfahrensschritt (II) entstandenen Polymerfilms zu einem Elastomerfilm;
(IV) Abziehen des nach Verfahrensschritt (III) erzeugten Elastomerfilms,
wobei die für den Verfahrensschritt (II) verwandte Polymermischung bei 20°C flüssig ist und aus eine Mischung von zwei Komponenten besteht, wovon die eine Komponente ein quervemetzbares Polymer und die andere Komponente ein Quervernetzungsreagenz enthält und der im Verfahrensschritt (II) aufgebrachte Polymerfilm in dem Verfahrensschritt (III) thermisch zu einem Elastomerfilm ausgehärtet wird,
**dadurch gekennzeichnet, dass** das quervernetzbare Polymer ein quervernetzbares Silicon-Polymer ist.

2. Verfahren nach Anspruch 1, wobei
in dem Verfahrensschritt (I) eine Paste, welche Nanostäbchen (4) und sinterbare Partikel enthält, mittels Siebdruck auf die Vorrichtung aufgebracht und danach zu einer anorganischen und elektrisch leitfähigen Haftschicht gebrannt wird, wobei die sinterbaren Partikel nach dem Brennen untereinander in mindestens einem Kontaktpunkt aneinandergesintert sind und eine Haftung auf der Oberfläche der Vorrichtung vermitteln.

3. Verfahren nach Anspruch 2, wobei
die für den Verfahrensschritt (I) verwandte Paste neben Nanostäbchen (4) weitere leitfähige Partikel, Carbid-bildende Partikel, ein organisches Dispergiermittel und ein organisches Lösemittel enthält.

4. Verfahren nach Anspruch 3 , wobei
die für den Verfahrensschritt (I) verwandte Paste nicht mehr als 2 Gew. % Nanostäbchen (4), insgesamt nicht mehr als 20 Gew. % an Glaspartikeln, zusätzlichen leitfähigen Partikeln und Carbid-bildenden Elementen einer mittleren Korngröße von 0,1 µm bis 5 µm bis zu 48,91 Gew. % Terpineole, bis zu 20,96 Gew. % Butylkarbitolacetat und bis zu 8,13 Gew. % Ethylcellulose enthält.

5. Verfahren nach einem der Ansprüche 1 bis 4, wobei
als Nanostäbchen (4, 7) Nanoröhren verwendet werden.

6. Verfahren nach Anspruch 5, wobei
als Nanostäbchen (4, 7) Kohlenstoffnanoröhren verwendet werden.

7. Verfahren nach Anspruch 5 oder 6, wobei
zur Herstellung der Beschichtung (2) Nanostäbchen (4, 7) aus Metalloxiden verwendet werden, welche aus der Gruppe an Metalloxiden, die Titanoxid, Zinkoxid und Manganoxid enthält, ausgewählt sind.

8. Verfahren nach einem der Ansprüche 5 bis 7, wobei
die Beschichtung (2) unter Verwendung von Nanostäbchen (4, 7) aus mindestens einem Metallsulfid hergestellt wird.

9. Verfahren nach einem der Ansprüche 5 bis 8, wobei
zur Herstellung der Beschichtung (2) Nanostäbchen (4, 7) aus Nitriden verwendet werden, welche aus der Gruppe an Nitriden, die Bornitrid, Aluminiumnitrid, Kohlenstoffnitrid und Galliumnitrid enthält, ausgewählt sind.

10. Verfahren nach einem der Ansprüche 5 bis 9, wobei
die Beschichtung (2) unter Verwendung von Nanostäbchen (4, 7) aus mindestens einem Carbid, insbesondere Siliziumcarbid, hergestellt wird.

11. Verfahren nach einem der Ansprüche 5 bis 10, wobei
die Beschichtung (2) unter Verwendung von Nanostäbchen (4, 7), welche Silizium aufweisen, hergestellt wird.

12. Verfahren nach einem der Ansprüche 5 bis 11 wobei
die Beschichtung (2) unter Verwendung von Nanostäbchen (4, 7), welche eine Mehrzahl unterschiedlicher Bestandteile umfassen, insbesondere mit einer Beschichtung versehen sind, hergestellt wird.

13. Verfahren nach Anspruch 12, wobei
die Nanostäbchen (4, 7) Cer oder Lanthan enthalten.

14. Verfahren nach einem der Ansprüche 1 bis 13, wobei
die Beschichtung (2) mehrwandige Kohlenstoffnanoröhren als Nanostäbchen (4,7) umfasst und wobei
die mehrwandigen Kohlenstoffnanoröhren (4,7) durch ein Bogenentladungsverfahren hergestellt sind.

## Claims

1. A method for the production of an electron emitter (1) with a coating (2) containing nanorods (4, 7) on a component surface (3), which comprises the following steps:
(I) applying nanorods (4, 7) to the entire coating region via an inorganic and electrically conductive adhesive layer (5);
(II) applying a liquid polymer mixture to the entire coating region, wherein the polymer mixture contains a crosslinkable polymer and a crosslinking component;
(III) curing the polymer film resulting from step (II) of the method to form an elastomer film;
(IV) peeling off the elastomer film produced in accordance with step (III) of the method,
wherein the polymer mixture used for step (II) of the method is liquid at 20°C and consists of a mixture of two components, of which one component contains a crosslinkable polymer and the other component contains a crosslinking reagent, and the polymer film applied in step (II) of the method is thermally cured to form an elastomer film in step (III) of the method, **characterized in that** the crosslinkable polymer is a crosslinkable silicone polymer.

2. The method as claimed in claim 1, wherein in step (I) of the method, a paste which contains nanorods (4) and sinterable particles is applied to the device by screen printing and thereafter fired to form an inorganic and electrically conductive adhesive layer wherein, after firing, the sinterable particles are sintered together in at least one point of contact and impart adhesion to the surface of the device.

3. The method as claimed in claim 2, wherein the paste used for step (I) of the method contains further conductive particles, carbide-forming particles, an organic dispersant and an organic solvent in addition to nanorods (4).

4. The method as claimed in claim 3, wherein the paste used for step (I) of the method contains no more than 2% by weight of nanorods (4), a total of no more than 20% by weight of glass particles, additional conductive particles and carbide-forming elements with an average grain size of 0.1 µm to 5 µm, up to 48.91% by weight of terpineols, up to 20.96% by weight of butyl carbitol acetate and up to 8.13% by weight of ethyl cellulose.

5. The method as claimed in one of claims 1 to 4, wherein nanotubes are used as the nanorods (4, 7).

6. The method as claimed in claim 5, wherein carbon nanotubes are used as the nanorods (4, 7).

7. The method as claimed in claim 5 or claim 6, wherein nanorods (4, 7) produced from metal oxides are used for the production of the coating (2), said nanorods being selected from the group of metal oxides which contains titanium oxide, zinc oxide and manganese oxide.

8. The method as claimed in one of claims 5 to 7, wherein the coating (2) is produced using nanorods (4, 7) produced from at least one metal sulphide.

9. The method as claimed in one of claims 5 to 8, wherein nanorods (4, 7) produced from nitrides are used for the production of the coating (2), said nanorods being selected from the group of nitrides which contains boron nitride, aluminium nitride, carbon nitride and gallium nitride.

10. The method as claimed in one of claims 5 to 9, wherein the coating (2) is produced using nanorods (4, 7) produced from at least one carbide, in particular silicon carbide.

11. The method as claimed in one of claims 5 to 10, wherein the coating (2) is produced using nanorods (4, 7) which comprise silicon.

12. The method as claimed in one of claims 5 to 11, wherein the coating (2) is produced using nanorods (4, 7) which comprise a plurality of different components, in particular provided with a coating.

13. The method as claimed in claim 12, wherein the nanorods (4, 7) contain cerium or lanthanum.

14. The method as claimed in one of claims 1 to 13, wherein the coating (2) comprises multi-walled carbon nanotubes as the nanorods (4, 7) and wherein the multi-walled carbon nanotubes (4, 7) are produced by means of an arc discharge method.

## Revendications

1. Procédé de réalisation, sur une surface d'une pièce (3), d'un émetteur d'électrons (1) pourvu d'un revêtement (2) contenant des nanobâtonnets (4, 7), comportant les étapes suivantes :
(I) appliquer des nanobâtonnets (4, 7) sur l'intégralité de la zone de revêtement, à travers une couche d'adhérence (5) inorganique et conductrice d'électricité ;
(II) appliquer un mélange de polymère liquide sur l'intégralité de la zone de revêtement, ledit mélange de polymère contenant un polymère susceptible d'être réticulé et un composant de réticulation ;
(III) faire durcir le film de polymère obtenu suite à l'étape de procédé (II), pour ainsi produire un film d'élastomère ;
(IV) retirer le film d'élastomère réalisé à l'étape de procédé (III), le mélange de polymère mis en œuvre pour l'étape de procédé (II) étant liquide à 20 °C et étant constitué d'un mélange de deux composants dont un composant contient un polymère susceptible d'être réticulé et dont l'autre composant contient un réactif de réticulation, et le film de polymère appliqué à l'étape de procédé (II) étant, à l'étape de procédé (III), durci de manière thermique pour ainsi produire un film d'élastomère, **caractérisé en ce que** le polymère susceptible d'être réticulé est un polymère de silicone susceptible d'être réticulé.

2. Procédé selon la revendication 1, l'étape de procédé (I) consistant à appliquer une pâte, laquelle contient des nanobâtonnets (4) et des particules aptes au frittage, sur le dispositif par sérigraphie pour ensuite la calciner de manière à obtenir une couche d'adhérence inorganique et conductrice d'électricité, les particules aptes au frittage étant, suite à la calcination, frittées les unes aux autres à au moins un point de contact et facilitant ainsi une adhérence à la surface du dispositif.

3. Procédé selon la revendication 2, la pâte mise en œuvre pour l'étape de procédé (I) contenant, outre les nanobâtonnets (4), d'autres particules conductrices, des particules formant du carbure, un agent dispersant organique et un solvant organique.

4. Procédé selon la revendication 3, la pâte mise en œuvre pour l'étape de procédé (I) contenant au maximum 2 % en poids de nanobâtonnets (4), au maximum un total de 20 % en poids de particules en verre, de particules conductrices supplémentaires et d'éléments formant du carbure dont la granulométrie moyenne est comprise entre 0,1 µm et 5 µm, jusqu'à 48,91 % en poids de terpinéols, jusqu'à 20,96 % en poids d'acétate de butylcarbitol et jusqu'à 8,13 % en poids d'éthylcellulose.

5. Procédé selon l'une des revendications 1 à 4, les nanobâtonnets (4, 7) mis en œuvre étant des nanotubes.

6. Procédé selon la revendication 5, les nanobâtonnets (4, 7) mis en œuvre étant des nanotubes de carbone.

7. Procédé selon les revendications 5 ou 6, le revêtement (2) étant réalisé en mettant en œuvre des nanobâtonnets (4, 7) constitués d'oxydes métalliques lesquels sont choisis dans le groupe d'oxydes métalliques contenant l'oxyde de titane, l'oxyde de zinc et l'oxyde de manganèse.

8. Procédé selon l'une des revendications 5 à 7, le revêtement (2) étant réalisé en mettant en œuvre des nanobâtonnets (4, 7) constitués d'au moins un sulfure métallique.

9. Procédé selon l'une des revendications 5 à 8, le revêtement (2) étant réalisé en mettant en œuvre des nanobâtonnets (4, 7) constitués de nitrures lesquels sont choisis dans le groupe de nitrures contenant le nitrure de bore, le nitrure d'aluminium, le nitrure de carbone et le nitrure de gallium.

10. Procédé selon l'une des revendications 5 à 9, le revêtement (2) étant réalisé en mettant en œuvre des nanobâtonnets (4, 7) constitués d'au moins un carbure, s'agissant notamment de carbure de silicium.

11. Procédé selon l'une des revendications 5 à 10, le revêtement (2) étant réalisé en mettant en œuvre des nanobâtonnets (4, 7) comportant du silicium.

12. Procédé selon l'une des revendications 5 à 11, le revêtement (2) étant réalisé en mettant en œuvre des nanobâtonnets (4, 7) comprenant une pluralité d'ingrédients différents et étant notamment pourvus d'un revêtement.

13. Procédé selon la revendication 12, les nanobâtonnets (4, 7) contenant du cérium ou du lanthane.

14. Procédé selon l'une des revendications 1 à 13, le revêtement (2) comprenant, en tant que nanobâtonnets (4, 7), des nanotubes de carbone multifeuillets, et les nanotubes de carbones multifeuillets (4, 7) ayant été fabriqués par un procédé à arc électrique.
